# EUROPEAN PATENT APPLICATION

(11) **EP 4 730 193 A1**
(43) Date of publication of application: **22.04.2026**
(21) Application number: 24306707.1
(22) Date of filing: 16.10.2024
(51) Int. Cl.: G06F 40/30

(54) **GENERATING VEHICLE CONDITION REPORTS USING TRAINED LARGE LANGUAGE MODELS**

(71) Applicant: ACV Auctions Inc., Buffalo NY 14203 (US)
(72) Inventor: MICHEL, Ewen Pascal Marie, 75014 Paris (FR); SCHUHL, Nicolas, 75002 Paris (FR); CHENUET, Mathis Roger Michel, 75013 Paris (FR); BONAQUE, Raphaël, 75010 Paris (FR)
(74) Representative: Mewburn Ellis LLP

(57) **Abstract**

The techniques described herein relate to generating vehicle condition reports at least in part using trained large language models (LLMs). An example method includes, using at least one computer processor, to perform: obtaining natural language text transcribed from an audio recording of a user speaking about a vehicle and its condition, identifying a first portion of the natural language text containing information about a condition of a part of the vehicle using a vehicle part condition dictionary, generating, using the first portion and portions of the natural language text that provide semantic context to the first portion, a prompt for prompting the trained LLM to generate output text identifying the part and describing its condition, providing the prompt as input to the trained LLM, receiving the output text from the trained LLM, and generating the vehicle condition report using the output text.

## Description

### FIELD

The techniques described herein relate generally to machine learning and, more particularly, to generating vehicle condition reports using trained large language models.

### BACKGROUND

Individuals involved in a sale of a vehicle typically have a vehicle professional conduct a manual inspection of the vehicle that includes both mechanical and visual assessments. This process often involves checking the exterior and interior for cosmetic and structural damage, examining the engine and transmission for signs of leaks or wear, and assessing the condition of the brakes, tires, and suspension. The results of the inspection may be verbally conveyed to an individual or documented in a report.

### SUMMARY

In accordance with the disclosed subject matter, apparatus, systems, and methods are provided for generating vehicle condition reports using trained large language models (LLMs).

Some embodiments relate to a method for processing audio data into a vehicle condition report using a trained LLM. The method comprises using at least one computer processor to perform: obtaining natural language text transcribed from an audio recording of a user speaking about a vehicle and its condition, identifying a first portion of the natural language text containing information about a condition of a part of the vehicle using a vehicle part condition dictionary, generating, using the first portion and portions of the natural language text that provide semantic context to the first portion, a prompt for prompting the trained LLM to generate output text identifying the part and describing its condition, providing the prompt as input to the trained LLM, receiving the output text from the trained LLM, and generating the vehicle condition report using the output text.

Some embodiments relate to an apparatus for processing audio data into a vehicle condition report using a trained LLM. The apparatus comprises at least one hardware processor, and at least one computer-readable storage medium storing processor-executable instructions that, when executed by the at least one hardware processor, cause the at least one hardware processor to perform a method comprising: obtaining natural language text transcribed from an audio recording of a user speaking about a vehicle and its condition, identifying a first portion of the natural language text containing information about a condition of a part of the vehicle using a vehicle part condition dictionary, generating, using the first portion and portions of the natural language text that provide semantic context to the first portion, a prompt for prompting the trained LLM to generate output text identifying the part and describing its condition, providing the prompt as input to the trained LLM, receiving the output text from the trained LLM, and generating the vehicle condition report using the output text.

Some embodiments relate to at least one computer-readable storage medium storing processor-executable instructions that, when executed by at least one hardware processor, cause the at least one hardware processor to perform a method comprising: obtaining natural language text transcribed from an audio recording of a user speaking about a vehicle and its condition, identifying a first portion of the natural language text containing information about a condition of a part of the vehicle using a vehicle part condition dictionary, generating, using the first portion and portions of the natural language text that provide semantic context to the first portion, a prompt for prompting the trained LLM to generate output text identifying the part and describing its condition, providing the prompt as input to the trained LLM, receiving the output text from the trained LLM, and generating the vehicle condition report using the output text.

Some embodiments relate to a system for processing audio data into a vehicle condition report using a trained LLM. The system comprises at least one hardware processor, and at least one computer-readable storage medium storing processor-executable instructions that, when executed by the at least one hardware processor, cause the at least one hardware processor to perform a method comprising: obtaining natural language text transcribed from an audio recording of a user speaking about a vehicle and its condition, identifying a first portion of the natural language text containing information about a condition of a part of the vehicle using a vehicle part condition dictionary, generating, using the first portion and portions of the natural language text that provide semantic context to the first portion, a prompt for prompting the trained LLM to generate output text identifying the part and describing its condition, providing the prompt as input to the trained LLM, receiving the output text from the trained LLM, and generating the vehicle condition report using the output text.

The foregoing summary is not intended to be limiting. Moreover, various aspects of the present disclosure may be implemented alone or in combination with other aspects.

### BRIEF DESCRIPTION OF FIGURES

Various aspects and embodiments will be described with reference to the following figures. It should be appreciated that the figures are not necessarily drawn to scale. Items appearing in multiple figures are indicated by the same or a similar reference number in all the figures in which they appear.
FIG. 1 is a schematic illustration of an example system including vehicle condition report software to process an audio recording of a user speaking about a vehicle and its condition into a vehicle condition report using a trained large language model (LLM), in accordance with some embodiments of the technology described herein.
FIG. 2 is a block diagram of an example implementation of the vehicle condition report software of FIG. 1 processing an audio recording of a user speaking about a vehicle and its condition into a vehicle condition report, in accordance with some embodiments of the technology described herein.
FIG. 3 is a schematic illustration of an example system including a vehicle condition detection service to process a video recording of a vehicle into detections of vehicle parts and their conditions and vehicle condition report software to process the detections and conditions into a vehicle condition report using a trained LLM, in accordance with some embodiments of the technology described herein.
FIG. 4 is a block diagram of an example implementation of the vehicle condition report software of FIGS. 1 and/or 3 processing detections of vehicle parts and their conditions into a vehicle condition report using a trained LLM, in accordance with some embodiments of the technology described herein.
FIG. 5 depicts an example implementation of a prompt for prompting a trained LLM to generate output text for inclusion in a vehicle condition report, in accordance with some embodiments of the technology described herein.
FIG. 6A depicts an example implementation of output text from the trained LLM in response to receiving a prompt, in accordance with some embodiments of the technology described herein.
FIG. 6B depicts another example implementation of output text from the trained LLM in response to receiving a prompt, in accordance with some embodiments of the technology described herein.
FIG. 7 is a flowchart representative of an example process that may be performed and/or example machine-readable instructions that may be executed by processor circuitry to implement the vehicle condition report software of FIGS. 1, 2, 3, and/or 4 to process natural language text transcribed from an audio recording into a vehicle condition report using a trained LLM, in accordance with some embodiments of the technology described herein.
FIG. 8 is a flowchart representative of an example process that may be performed and/or example machine-readable instructions that may be executed by processor circuitry to implement the vehicle condition report software of FIGS. 1, 2, 3, and/or 4 to process natural language text transcribed from an audio recording and/or detections of vehicle parts and their conditions from a video recording into a vehicle condition report using a trained LLM, in accordance with some embodiments of the technology described herein.
FIG. 9 is an example electronic platform structured to execute the machine-readable instructions of FIGS. 7 and/or 8 to implement the vehicle condition report software of FIGS. 1, 2, 3, and/or 4, in accordance with some embodiments of the technology described herein.

### DETAILED DESCRIPTION

The present application describes techniques for processing electronic input (e.g., audio and/or video) representative of a user describing a vehicle and its condition into a report documenting the vehicle, its parts, and their respective conditions. The report can be generated, at least in part, using a trained machine learning (ML) model such as a trained large language model (LLM). Beneficially, the techniques described herein can process electronic input generated by an electronic device of a user into a report describing a vehicle and its condition with improved ease and accuracy with respect to manual vehicle condition report generation.

Conventional approaches to evaluating a vehicle for its condition and documenting the same include a vehicle professional (e.g., an inspector, a service technician) looking at various parts of a vehicle and compiling their findings in a report. A first conventional approach involves a vehicle professional (e.g., a vehicle inspector) documenting their findings in a report as they encounter them. For example, a vehicle professional may walk around a vehicle to inspect cosmetic and/or structural damage, enter the vehicle interior to evaluate interior conditions, and open a hood of the vehicle to inspect for engine and transmission leaks and wear. In such an example, as the vehicle professional identifies an item of interest, such as damage to a vehicle door, the vehicle professional stops their inspection and documents the item in writing, such as by using pen and paper or electronically using a keyboard on a mobile electronic device (e.g., a smartphone, a tablet computer).

A second conventional approach involves a vehicle professional compiling a report using audio playback of a previously completed vehicle evaluation. For example, a vehicle professional may verbally narrate their evaluation of a vehicle and capture the narration in using an audio recording device. In such an example, the vehicle professional may use the audio recording device to capture an audio recording of the vehicle professional verbally describing their findings as the vehicle evaluation progresses. After the vehicle evaluation is complete, the vehicle professional may play back the audio recording while compiling their report.

The inventors have recognized that these conventional approaches to evaluating a vehicle for its condition are time consuming. Specifically, the inventors have recognized that the first conventional approach above is time consuming because the vehicle professional continuously stops to document each finding. The inventors have also recognized that the second conventional approach above is time consuming because the vehicle professional listens to the audio playback while compiling the report, which can in some instances double the time it takes to complete the vehicle evaluation (e.g., performing the vehicle evaluation and playing back the entire vehicle evaluation to compile the report).

The inventors have also recognized that these conventional approaches to evaluating a vehicle for its condition are inaccurate and/or misleading because the vehicle professional can unintentionally omit findings from the report and/or understate findings in the report. For example, the vehicle professional can unintentionally mistake a dirty vehicle component for paint damage or, in some cases, not document a finding such as paint damage because they think that the paint damage is dirt or another contaminant from the environment. In another example, the vehicle professional can document a finding of a scratch on a vehicle door in a report but may omit the severity of the scratch (e.g., a size and/or depth of the scratch) from the report.

The inventors have further recognized that these conventional approaches to evaluating a vehicle for its condition lack report standardization, which can make analyzing them challenging. For example, different vehicle professionals can compile a report in different ways, such as compiling a report with a substantial degree of detail or compiling a report with a limited amount of detail. In another example, different vehicle professionals can compile reports having different record formats (e.g., a different number and/or type of fields in the report for completion). Evaluating reports having different record formats is challenging when determining if the reports are complete or are missing important information, such as whether a particular vehicle component (e.g., a radiator) has a particular condition (e.g., a crack).

The inventors have developed technology that overcomes the technical challenges of the above-discussed conventional approaches. Specifically, the inventors have developed technology that processes electronic input, such as audio and/or video generated by an electronic device of a user, into a report that identifies parts of a vehicle and their respective conditions in reduced time, with improved accuracy, and in a standardized report format.

The technology developed by the inventors can be explained by way of an example in which a user examines and/or inspects a vehicle for its condition using an electronic device. In this example, the user can walk around the vehicle, look underneath or above the vehicle, and look inside the vehicle while generating electronic input using the electronic device. The electronic device can be a mobile device of the user (e.g., a smartphone, a tablet computer).

In this example, the electronic input can include audio of the user describing the vehicle, its parts, and their conditions while the user is evaluating the vehicle. For example, the audio can include an audio recording captured by the electronic device of a user describing damage (e.g., a dent, a ding, a scratch) on a vehicle part (e.g., a passenger car door) while the user is walking around the vehicle. In such an example, the audio recording may include the user speaking "There is a large scratch on the passenger side front door."

Furthering the example, the electronic input can include video of what the user sees as the user inspects the vehicle. For example, the video can include a video recording captured by the user's electronic device from the perspective of what the user sees as the user walks around the vehicle. In such an example, the video recording may capture the large scratch on the passenger side front door of the vehicle from the perspective of the user.

The technology developed by the inventors includes vehicle condition report software processing the electronic input into a report documenting the vehicle, its parts, and their respective conditions. In some embodiments, the vehicle condition report software can transcribe, using an audio transcription service, an audio recording into natural language text. The audio recording can be of a user speaking about a vehicle and its condition.

The vehicle condition report software can identify a first portion of the natural language text containing information about a condition of a vehicle part using a vehicle part condition dictionary. For example, the vehicle part condition dictionary can include terms such as "chip", "dent", "ding", and "scratch". In such an example, the vehicle condition report software can identify the first portion by comparing the first portion to the terms in the vehicle part condition dictionary to identify any exact or substantially similar matches. By way of example, the vehicle condition report software can identify a first portion of "scratch" of the natural language text of "There is a large scratch on the passenger side front door" as containing information about a condition of a vehicle part. The vehicle condition report software can identify the first portion of "scratch" by comparing words of the natural language text to terms in the vehicle part condition dictionary. The vehicle condition report software can identify the first portion of "scratch" by determining that "scratch" matches the term "scratch" from the vehicle part condition dictionary.

The vehicle condition report software can process, using a trained LLM, the first portion of the natural language text into a report. For example, the vehicle condition report software can generate, using the first portion (e.g., "scratch") and portions of the natural language text (e.g., "large", "passenger side front door") that provide semantic context to the first portion, a prompt for prompting the trained LLM to generate output text identifying the part and describing its condition. In such an example, the vehicle condition report software can generate, using the natural language text of "scratch" and portions "large" and "passenger side front door", a prompt for prompting the trained LLM to generate output text describing the scratch, its location on the vehicle, and/or its severity.

In some embodiments, the one or more portions that provide semantic context precede the first portion and/or follow the first portion. In some embodiments, one or more portions that provide semantic context can be at least one surrounding portion to the first portion, such as "large" that surrounds the first portion on at least one side of the first portion "scratch". In some embodiments, the one or more portions can be adjacent and/or neighboring portions, such as "large" that is adjacent to and/or neighboring the first portion "scratch". In some embodiments, the one or more portions can be nearby and/or proximate portions, such as "passenger side front door" that is nearby and/or proximate to the first portion "scratch".

The vehicle condition report software can provide the prompt as input to the trained LLM. The vehicle condition report software can receive the output text from the trained LLM. The vehicle condition report software can generate a report using the output text. For example, the vehicle condition report software can generate the report to include a first section associated with a driver side front door, a second section associated with a passenger side front door, etc. In such an example, the vehicle condition report software can generate, populate, and/or update the second section with the output text from the trained LLM.

In some embodiments, the vehicle condition report software can determine that the transcribed audio is unreliable for report generation. In some such embodiments, the vehicle condition report software can request video of the user describing the vehicle's condition. The vehicle condition report software can process the video, using at least one machine learning (ML) model, into detections of the vehicle parts and their respective conditions. For example, the at least one ML model can process the video recording of the large scratch into a detection of the large scratch, its location on the vehicle, and/or its severity. In such an example, the vehicle condition report software can generate, using the detection(s), a prompt for prompting the trained LLM to generate output text describing the large scratch, its location on the vehicle, and/or its severity.

The technology developed by the inventors can process electronic input into a report describing a vehicle and its condition in reduced time, with improved accuracy, and in a standardized report format to overcome the technological challenges with conventional approaches. First, the vehicle condition report software can generate a report in reduced time with respect to conventional approaches by generating the report substantially in parallel with the user evaluating the vehicle. For example, the vehicle condition report software can populate sections of the report as the user speaks and/or captures video during the vehicle evaluation. In such an example, the vehicle condition report software can generate the report describing the vehicle and its condition as the user completes their vehicle evaluation. Advantageously, by completing the report substantially in parallel with the vehicle evaluation, the vehicle condition report software eliminates the need for a user to stop and manually complete a report with each finding. Further, the vehicle condition report software eliminates the need for a user to play back an audio recording after a vehicle evaluation is complete for the purposes of completing a report.

The term "substantially in parallel" may refer to occurrence in a near instantaneous and/or simultaneous manner recognizing there may be real-world delays for computing time, transmission, etc. For example, the vehicle condition report software may output a portion of the report within 1 second, 500 milliseconds, 100 milliseconds, 10 milliseconds, etc., of the corresponding real-world activity. In such an example, the vehicle condition report software may output a portion of the report related to a hood of a vehicle within 1 second, 500 milliseconds, 100 milliseconds, 10 milliseconds, etc., of a user describing the vehicle hood to the vehicle condition report software.

Second, the vehicle condition report software can generate a report with improved accuracy with respect to conventional approaches. For example, a user can narrate with enhanced detail knowing that they do not have to manually complete a report after completing the vehicle evaluation. In conventional approaches, a user may document a vehicle condition with less detail to save time or fail to document a vehicle condition at all because they may be in a rush to complete the vehicle evaluation. In contrast to these conventional approaches that lead to less accurate reports, the vehicle condition report software can generate a report with improved accuracy using the enhanced detail provided by the user. Additionally, the vehicle condition report software can generate a report with improved accuracy by using at least one ML model to identify vehicle parts and their conditions, which can include vehicle conditions omitted by the vehicle professional.

Third, the vehicle condition report software can generate a report in a standardized report format. In contrast to conventional approaches in which different vehicle professionals can prepare reports differently, the vehicle condition report software can generate reports in a standardized report format and ensure that the report is complete with a sufficient level of detail. For example, the vehicle condition report software can prompt the user for additional information if a vehicle condition is missing or if further video (e.g., another angle of a dent) is needed to complete the report. Beneficially, the vehicle condition report software and/or, more generally, the technology developed by the inventors, implement a technological solution of generating reports of vehicles and their conditions using audio processing and/or ML techniques to solve the technological problems of substantial time consumption, inaccuracy, and non-standardized report formatting that arise with conventional approaches to evaluating a vehicle and its condition.

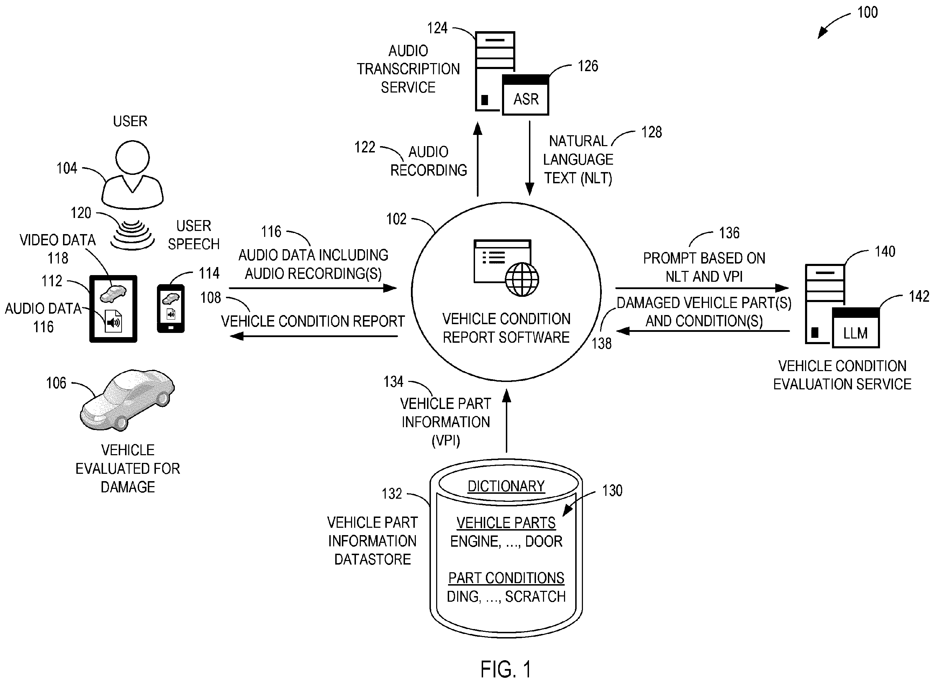

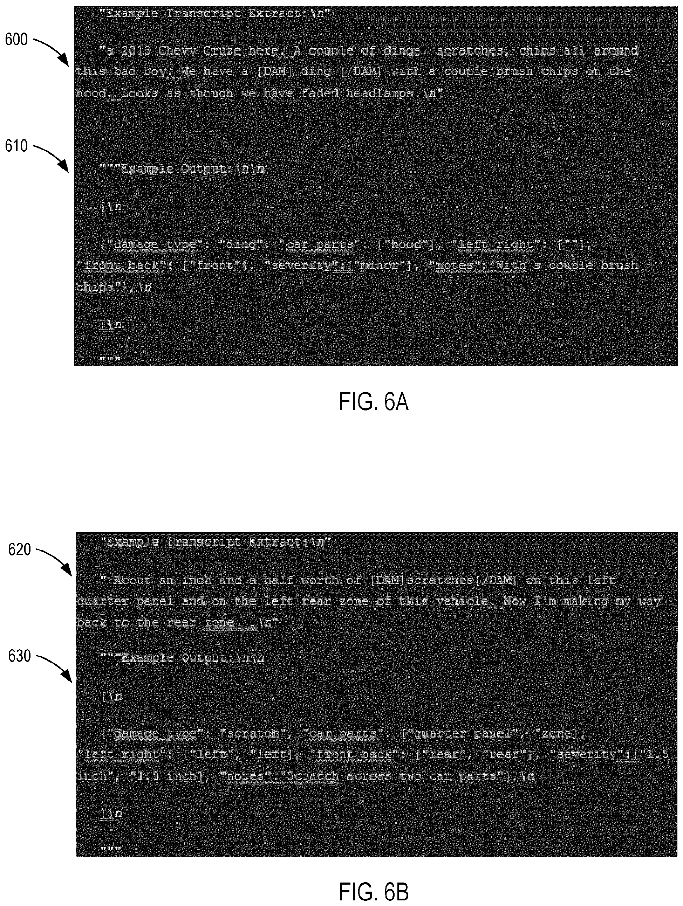

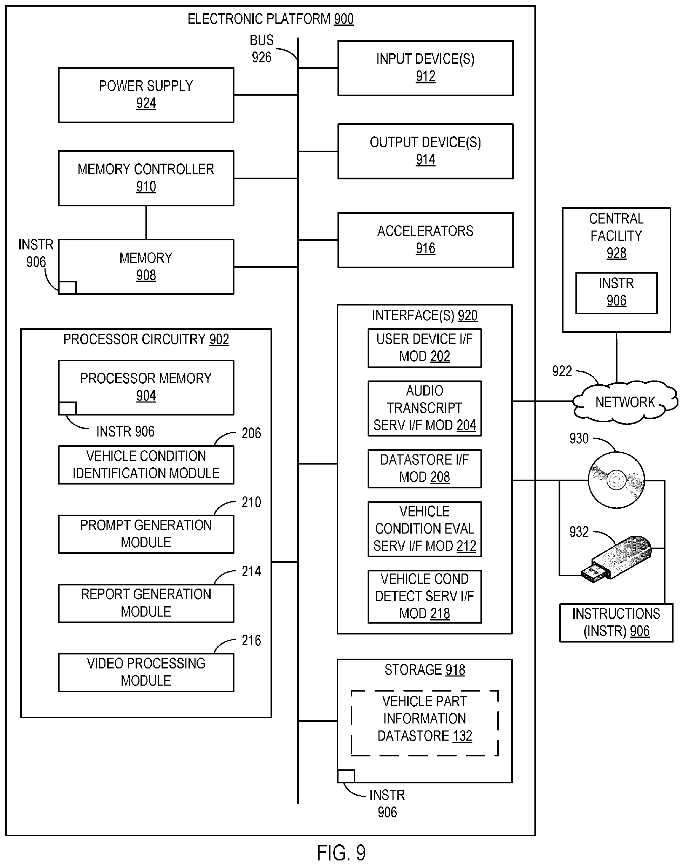

Accordingly, some embodiments provide for a method for processing audio data (e.g., the audio data in FIG. 1) into a vehicle condition report (e.g., the vehicle condition report of FIG. 1) using a trained large language model (LLM) (e.g., the trained LLM of FIG. 1) comprising: using at least one computer processor (e.g., the processor circuitry of FIG. 9, the accelerators of FIG. 9) to perform: obtaining natural language text (e.g., the natural language text of FIG. 1) transcribed from an audio recording (e.g., the audio recording of FIG. 1) of a user (e.g., the user of FIG. 1) speaking about a vehicle (e.g., the vehicle of FIG. 1) and its condition, identifying a first portion of the natural language text containing information about a condition of a part of the vehicle using a vehicle part condition dictionary (e.g., the dictionary of FIG. 1), generating, using the first portion and portions of the natural language text that provide semantic context to the first portion, a prompt (e.g., the prompt of FIG. 1) for prompting the trained LLM to generate output text (e.g., the identification(s) of the damaged vehicle part(s) and condition(s) of FIG. 1), the output text of FIGS. 6A and/or 6B) identifying the part and describing its condition, providing the prompt as input to the trained LLM, receiving the output text from the trained LLM, and generating the vehicle condition report using the output text.

In some embodiments, the method further comprises receiving the audio recording, and transcribing the audio recording of the user speaking about the vehicle and its condition.

In some embodiments, the audio recording was recorded by a mobile device (e.g., the electronic device of FIG. 1) of the user, and wherein the at least one computer processor is part of the mobile device and/or part of at least one other computing device remote from the mobile device.

In some embodiments, the method further comprises receiving the audio recording, and transcribing, using an audio transcription service (e.g., the audio transcription service of FIG. 1), the audio recording into the natural language text.

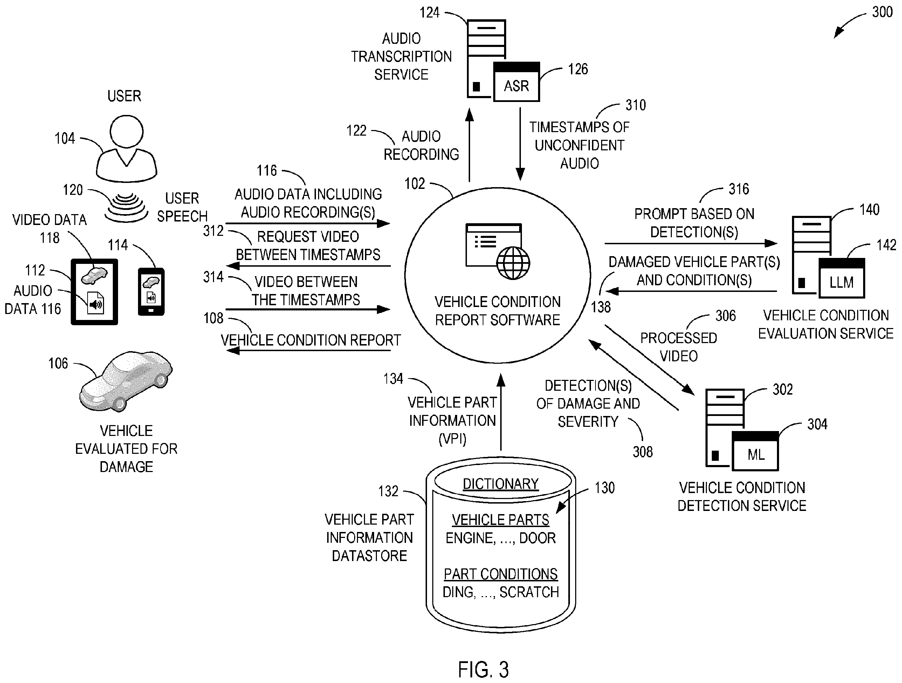

In some embodiments, the natural language text comprises a plurality of words, wherein the transcribing further includes, for each particular word of at least some of the plurality of words: determining a transcription of the particular word, determining a confidence level for the transcription of the particular word, and generating at least one timestamp (e.g., the timestamps of FIG. 3) indicative of when the particular word occurs in the audio recording.

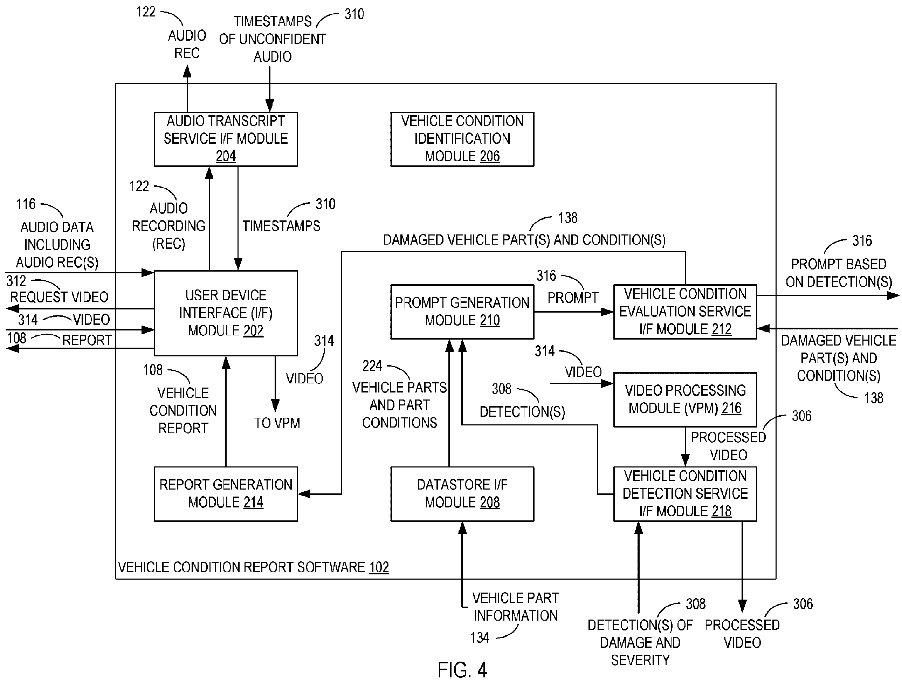

In some embodiments, the natural language text comprises a transcription of a first word, the transcribing comprises determining a first confidence level for the transcription of the first word, and the method further comprises: determining that the first confidence level is below a threshold, and responsive to determining that the first confidence level is below the threshold, obtaining a video recording (e.g., the video of FIGS. 3 and/or 4) of the vehicle during a time period determined using the at least one timestamp.

In some embodiments, the method further comprises processing at least a portion of the video recording using at least one trained machine learning model (e.g., the at least one ML model of FIG. 3) different from the trained LLM to identify, from the portion of the video recording, the part and detect its condition.

In some embodiments, processing the portion of the video recording comprises detecting a severity of the condition of the part using the at least one trained machine learning model.

In some embodiments, the portion of the video recording comprises a plurality of video frames, and wherein processing the portion of the video recording comprises selecting a subset of the plurality of video frames (e.g., the processed video of FIG. 3) for input to the at least one trained ML model, wherein the selecting is performed using a Laplacian filter to identify the least blurry video frames.

In some embodiments, the method further comprises processing the prompt using the trained LLM to generate the output text.

In some embodiments, the method further comprises receiving, using a network interface (e.g., the interface(s) of FIG. 9) at a server (e.g., the electronic platform of FIG. 9), the vehicle part condition dictionary from a datastore (e.g., the datastore of FIG. 1), comparing, using vehicle condition report software (e.g., the vehicle condition report software of FIG. 1) executed by the server, the natural language text to the vehicle part condition dictionary, and associating an identifier (e.g., the identifier of FIGS. 6A and/or 6B) and the portion of the natural language text when the portion of the natural language text corresponds to at least one word in the vehicle part condition dictionary.

In some embodiments, the identifier is indicative of the portion of the natural language text being associated with a vehicle part condition (e.g., the part conditions of FIG. 1), and generating the prompt comprises generating the prompt for prompting the trained LLM to identify the part and describing its condition by processing proximate portions of the portion of the natural language text appended with the identifier.

In some embodiments, the method further comprising outputting the vehicle condition report to a mobile device (e.g., the electronic device of FIG. 1) of the user and/or a database remote from the mobile device.

Some embodiments provide for an apparatus (e.g., the electronic platform of FIG. 9) for processing audio data (e.g., the audio data of FIG. 1) into a vehicle condition report (e.g., the vehicle condition report of FIG. 1) using a trained large language model (LLM) (e.g., the trained LLM of FIG. 1) comprising at least one hardware processor (e.g., the processor circuitry of FIG. 9, the accelerators of FIG. 9), and at least one computer-readable storage medium (e.g., the memory of FIG. 9, the processor memory of FIG. 9, the storage of FIG. 9) storing processor-executable instructions (e.g., the instructions of FIG. 9) that, when executed by the at least one hardware processor, cause the at least one hardware processor to perform a method comprising obtaining natural language text (e.g., the natural language text of FIG. 1) transcribed from an audio recording (e.g., the audio recording of FIG. 1) of a user (e.g., the user of FIG. 1) speaking about a vehicle (e.g., the vehicle of FIG. 1) and its condition, identifying a first portion of the natural language text containing information about a condition of a part of the vehicle using a vehicle part condition dictionary (e.g., the dictionary of FIG. 1), generating, using the first portion and portions of the natural language text that provide semantic context to the first portion, a prompt (e.g., the prompt of FIG. 1) for prompting the trained LLM to generate output text (e.g., the identification(s) of the damaged vehicle part(s) and condition(s) of FIG. 1), the output text of FIGS. 6A and/or 6B) identifying the part and describing its condition, providing the prompt as input to the trained LLM, receiving the output text from the trained LLM, and generating the vehicle condition report using the output text.

Some embodiments provide for at least one computer-readable storage medium (e.g., the memory of FIG. 9, the processor memory of FIG. 9, the storage of FIG. 9) storing processor-executable instructions (e.g., the instructions of FIG. 9) that, when executed by at least one hardware processor (e.g., the processor circuitry of FIG. 9, the accelerators of FIG. 9), cause the at least one hardware processor to perform a method comprising obtaining natural language text (e.g., the natural language text of FIG. 1) transcribed from an audio recording (e.g., the audio recording of FIG. 1) of a user (e.g., the user of FIG. 1) speaking about a vehicle (e.g., the vehicle of FIG. 1) and its condition, identifying a first portion of the natural language text containing information about a condition of a part of the vehicle using a vehicle part condition dictionary (e.g., the dictionary of FIG. 1), generating, using the first portion and portions of the natural language text that provide semantic context to the first portion, a prompt (e.g., the prompt of FIG. 1) for prompting the trained LLM to generate output text (e.g., the identification(s) of the damaged vehicle part(s) and condition(s) of FIG. 1), the output text of FIGS. 6A and/or 6B) identifying the part and describing its condition, providing the prompt as input to the trained LLM, receiving the output text from the trained LLM, and generating the vehicle condition report using the output text.

Some embodiments provide for a system for processing audio data (e.g., the audio data of FIG. 1) into a vehicle condition report (e.g., the vehicle condition report of FIG. 1) using a trained large language model (LLM) (e.g., the trained LLM of FIG. 1), the system comprising at least one hardware processor (e.g., the processor circuitry of FIG. 9, the accelerators of FIG. 9), and at least one computer-readable storage medium (e.g., the memory of FIG. 9, the processor memory of FIG. 9, the storage of FIG. 9) storing processor-executable instructions (e.g., the instructions of FIG. 9) that, when executed by the at least one hardware processor, cause the at least one hardware processor to perform a method obtaining natural language text (e.g., the natural language text of FIG. 1) transcribed from an audio recording (e.g., the audio recording of FIG. 1) of a user (e.g., the user of FIG. 1) speaking about a vehicle (e.g., the vehicle of FIG. 1) and its condition, identifying a first portion of the natural language text containing information about a condition of a part of the vehicle using a vehicle part condition dictionary (e.g., the dictionary of FIG. 1), generating, using the first portion and portions of the natural language text that provide semantic context to the first portion, a prompt (e.g., the prompt of FIG. 1) for prompting the trained LLM to generate output text (e.g., the identification(s) of the damaged vehicle part(s) and condition(s) of FIG. 1), the output text of FIGS. 6A and/or 6B) identifying the part and describing its condition, providing the prompt as input to the trained LLM, receiving the output text from the trained LLM, and generating the vehicle condition report using the output text.

The techniques described herein may be implemented in any of numerous ways, as the techniques are not limited to any particular manner of implementation. Examples of details of implementation are provided herein solely for illustrative purposes. Furthermore, the techniques disclosed herein may be used individually or in any suitable combination, as aspects of the technology described herein are not limited to the use of any particular technique or combination of techniques.

Turning to the figures, the illustrated example of FIG. 1 is a schematic illustration of an example system 100 including vehicle condition report software 102 to process an audio recording of a user 104 speaking about a vehicle 106 and its condition into a report 108 using a trained large language model (LLM). The system 100 can be a report generation system (e.g., a vehicle report generation system) configured to process electronic input generated by an electronic device 112, 114 of the user 104 into the report 108. The electronic input can include the audio recording captured by the electronic device 112, 114.

Examples of the report include a condition report (e.g., a vehicle condition report, a damage report, a vehicle damage report), an inspection report (e.g., a vehicle inspection report), and a maintenance report (e.g., a vehicle maintenance report). For example, the user 104 may be a vehicle inspector compiling an inspection report to document a condition of the vehicle 106 they are inspecting. In another example, the user 104 may be a service technician for a vehicle dealership and/or service center compiling a maintenance report to document a condition of the vehicle 106 they are servicing. In yet another example, the user 104 may be a vehicle professional for a vehicle sales entity compiling a vehicle condition report to document which parts of the vehicle 106 are damaged and the severity of the damage. In another example, the user 104 may be a party to a transaction involving the vehicle 106, such as a person buying or selling the vehicle 106. The user 104 in this example may use the vehicle condition report software 102 to generate a report documenting a condition of the vehicle 106, such as a condition report, for purposes of the transaction.

The vehicle 106 of this example is an automobile, such as a passenger vehicle. The passenger vehicle shown in FIG. 1 is a sedan. Alternatively, the passenger vehicle may be a sports utility vehicle, a station wagon, or a van. Alternatively, the vehicle 106 may be a commercial vehicle or a recreation vehicle.

Examples of commercial vehicles include semi-trailers and trucks (e.g., box trucks, pickup trucks). Examples of recreation vehicles include trailer coaches and park trailers. The techniques described herein are applicable to any type of vehicle, which may be classified by any type of propulsion. For example, the techniques described herein can be applicable to electric vehicles (EVs), plug-in electric vehicles (PEVs), battery electric vehicles (BEVs), hybrid electric vehicles (HEVs), plug in hybrid electric vehicles (PHEVs), fuel cell electric vehicles (FCEVs), plug in fuel cell vehicles (PFCVs), and internal combustion engine vehicles (ICEVs). For example, the vehicle 106 can be an ICEV sedan or an electric sedan (e.g., a sedan EV).

Additionally and/or alternatively, the techniques described herein are applicable to aerial vehicles. Examples of aerial vehicles include manned and unmanned aircraft (e.g., drones). Examples of manned aircraft include an airplane (e.g., an airliner, a jet, a sea plane) and a rotorcraft (e.g., a helicopter).

Additionally and/or alternatively, the techniques described herein are applicable to marine vehicles. Examples of marine vehicles include boats, ships, and submarines.

In the illustrated example, the user 104 is evaluating (e.g., assessing, examining, inspecting) a condition of the vehicle 106. For example, the user 104 can evaluate the vehicle 106 for damage to one or more parts, an exterior of the vehicle 106, and/or an interior of the vehicle 106.

Examples of parts (e.g., car parts, vehicle parts) include body parts, electrical parts, electromechanical parts, and mechanical parts. Examples of body parts include a door, a hood, a panel (e.g., a quarter panel), a trunk lid, and a window. Examples of a window include a door window, a roof window (e.g., a sunroof), a front windshield, and a rear windshield.

Examples of electrical parts include a battery, an exterior car light (e.g., a headlight, a blinker/turn signal light, a tail light), and a starter.

Examples of mechanical parts include a brake, a manifold (e.g., an intake manifold, an exhaust manifold), a muffler, suspension, a transmission, a tire, and a wheel.

Examples of electromechanical parts include an alternator, an engine (e.g., ICEs), and a motor (e.g., electric motors).

Examples of conditions (e.g., part conditions, vehicle conditions) include part damage and part failure. Examples of part damage include body damage, engine damage, and transmission damage. Examples of body damage include a crack, a dent, a ding, a scratch. For example, body damage may include a cracked window, a dented quarter panel, a dinged door, and/or a scratched hood. Examples of engine damage include broken piston rings, cracked pistons, cracked or broken crankshafts, a cracked cylinder block, and burnt out exhaust valves.

Examples of part failure include malfunctioning sensors, seal leaks, and timing belt failures. For example, a malfunctioning sensor may include a sensor that is outputting faulty measurements or no measurements at all. In another example, a seal leak may include a fluid leak (e.g., an engine oil leak, a transmission fluid leak, a radiator leak).

As shown in FIG. 1, the user 104 is evaluating the vehicle 106 for damage and/or, more generally, a condition of the vehicle 106 and its parts, using the electronic device 112, 114 of the user 104. The electronic device 112, 114 can be a mobile device (e.g., a mobile electronic device), such as a cellular phone 112 (e.g., a smartphone) (shown) or a tablet computer 114 (shown).

Additionally and/or alternatively, the electronic device 112, 114 may be a wearable device. Examples of wearable devices include headphones, headsets, smartwatches, and smart glasses. The wearable device may be an augmented reality and/or virtual reality (AR/VR) wearable device, such as an AR/VR headset or AR/VR smart glasses.

The user 104 can generate electronic input 116, 118 representing an evaluation of the condition of the vehicle 106 using the electronic device 112, 114. The electronic input 116, 118 of this example include audio data 116. The audio data 116 can be audio that is captured and stored on a computer-readable storage medium of the electronic device 112, 114 as one or more audio recordings 122. For example, the user 104 can capture audio of the user 104 describing the vehicle 106 using at least one microphone of the electronic device 112, 114. In such an example, the audio can be stored as one or more audio recordings 122. The one or more audio recordings 122 may be played back as user speech 120 of the user 104 describing the vehicle 106 and its condition.

Additionally and/or alternatively, the electronic input 116, 118 include video data 118. The video data 118 can be video that is captured and stored on a computer-readable storage medium of the electronic device 112, 114 as one or more video recordings. For example, the user 104 can capture video of the vehicle 106 using at least one camera of the electronic device 112, 114. In such an example, the video can be stored as one or more video recordings.

In the illustrated example, the vehicle condition report software 102 obtains the audio data 116 from the electronic device 112, 114. For example, the vehicle condition report software 102 can receive the audio data 116 including one or more audio recordings 122 of the user 104 describing the vehicle 106, its condition, the parts of the vehicle 106, and/or respective conditions of the parts of the vehicle 106.

As shown, the vehicle condition report software 102 processes the audio data 116 into a report (e.g., a condition report, an inspection report, a maintenance report) using a trained large language model (LLM). The report can describe, document, and/or otherwise describe a condition of the vehicle 106.

The vehicle condition report software 102 of this example is implemented by one or more servers (e.g., computer servers) accessible via a network (e.g., a computer-implemented network). For example, the vehicle condition report software 102 can be implemented by one or more physical servers and/or virtualizations of the one or more physical servers. In some embodiments, the one or more servers are hosted by a cloud provider (e.g., a public cloud provider, a private cloud provider) and/or an enterprise network.

The network (not shown) may be implemented by any wired and/or wireless network(s) such as one or more cellular networks (e.g., 4G LTE cellular networks, 5G cellular networks, future generation 6G cellular networks, etc.), one or more data buses, one or more local area networks (LANs), one or more optical fiber networks, one or more private networks, one or more public networks, one or more satellite networks, one or more wireless local area networks (WLANs), etc., and/or any combination(s) thereof. For example, the network may be the Internet, but any other type of private and/or public network is contemplated.

As depicted, the vehicle condition report software 102 provides and/or outputs an audio recording 122 to an audio transcription service 124. Alternatively, the vehicle condition report software 102 may provide and/or output multiple audio recordings to the audio transcription service 124.

Although the audio transcription service 124 is shown as separate from the electronic device 112, 114, additionally and/or alternatively, the audio transcription service 124 may be part of and/or implemented by the electronic device 112, 114. For example, the electronic device 112, 114 can execute at least one automatic speech recognition (ASR) model 126 and/or, more generally, the audio transcription service 124, locally on the electronic device 112, 114.

Although the audio transcription service 124 is shown as separate from the vehicle condition report software 102, additionally and/or alternatively, the audio transcription service 124 may be part of and/or implemented by the vehicle condition report software 102. For example, the vehicle condition report software 102 can execute the at least one ASR model 126 and/or, more generally, the audio transcription service 124, as part of the vehicle condition report software 102.

The audio transcription service 124 of this example is implemented by one or more servers (e.g., computer servers) accessible via a network (e.g., a computer-implemented network). For example, the audio transcription service 124 can be implemented by one or more physical servers and/or virtualizations of the one or more physical servers. In some embodiments, the one or more servers are hosted by a cloud provider (e.g., a public cloud provider, a private cloud provider) and/or an enterprise network.

The audio transcription service 124 processes the audio recording 122 into natural language text 128. In some embodiments, the audio transcription service 124 processes the audio recording 122 into the natural language 128 text by transcribing the audio recording 122 into the natural language text 128.

In some embodiments, the audio transcription service 124 transcribes the audio recording 122 using the at least one ASR model 126. The at least one ASR model 126 can be at least one machine learning (ML) model. For example, the audio transcription service 124 can execute at least one ML model to convert the audio recording 122 into the natural language text 128.

In some embodiments, the at least one ASR model 126 can be at least one natural language processing (NLP) model. For example, the audio transcription service 124 can execute at least one NLP model to convert the audio recording 122 into the natural language text 128.

In some embodiments, the audio transcription service 124 includes and/or implements WHISPER^{®} provided by OpenAI or Chirp provided by GOOGLE^{®}.

In some embodiments, for each particular word of at least some of a plurality of words represented by the audio recording 122, the audio transcription service 124 can determine a transcription of the particular word, determine a confidence level for the transcription of the particular word, and generate at least one timestamp indicative of when the particular word occurs in the audio recording 122. For example, the audio transcription service 124 can determine a transcription of "engine" from the audio recording 122, a confidence level of 95% for the transcription of "engine", and a timestamp of 00:00: 18 in hour/minute/second format (hh/mm/ss) indicative of the word "engine" appearing 18 seconds into the audio recording 122. In this example, the confidence level is expressed as a percentage (e.g., 95%) in a range of 0 to 100%. Alternatively, the confidence level may be expressed as a number in a number range, such as a number in a range between 0.0 and 1.0. In such examples, a lower score indicates a lower likelihood of correct recognition (e.g., 0%, 0.0) and a higher score indicates a higher likelihood of correct recognition (e.g., 100%, 1.0).

As shown, the audio transcription service 124 outputs the natural language text 128 transcribed from the audio recording 122 of the user 104 speaking about the vehicle 106 and its condition to the vehicle condition report software 102. Additionally and/or alternatively, the audio transcription service 124 may output a confidence level and at least one timestamp for each particular word of at least some of the plurality of words represented by the natural language text 128.

In the illustrated example, the vehicle condition report software 102 identifies portion(s) of the natural language text 128 containing information about a condition of a part of the vehicle 106. The vehicle condition report software 102 may identify the portion(s) using a dictionary 130 (e.g., a vehicle part information dictionary).

As shown, the dictionary is stored in a datastore 132. The datastore 132 is a vehicle part information datastore. Although the datastore 132 is shown separate from the vehicle condition report software 102 in FIG. 1, additionally and/or alternatively, the vehicle condition report software 102 may include and/or implement the datastore 132.

The dictionary 130 includes a plurality of terms (e.g., words, phrases). Examples of terms include terms for vehicle parts and part conditions.

Examples of vehicle part terms include terms for body parts, electrical parts, electromechanical parts, and mechanical parts. For example, the vehicle part terms can include "engine", "hood", "roof', "trunk", "engine", "door", "roof', "wheel", and "window". The vehicle part terms can include different grammatical variations of terms. For example, the vehicle part terms can include "door" and variation(s) thereof such as "doors".

Examples of part conditions include terms for part damage and part failure. For example, the part damage terms can include "burn", "broken", "crack", "dent", "ding", "scratch", and "leak". The part damage terms can include different grammatical variations of terms. For example, the part damage terms can include "burn" and variations thereof such as "burned" and "burnt".

The vehicle condition report software 102 can identify a first portion of the natural language text 128 by comparing the first portion to the terms in the dictionary 130 to identify any exact or substantially similar matches. For example, the vehicle condition report software 102 can obtain vehicle part information 134 of the dictionary 130 from the datastore 132. The vehicle part information 134 may be the entire dictionary 130, or portion(s) thereof, such as one(s) of the vehicle part terms and/or one(s) of the part condition terms.

By way of example, the natural language text 128 can include "There is a large scratch on the passenger side front door". The vehicle condition report software 102 can identify "scratch" as a first portion of the natural language text 128 as containing information about a condition of a vehicle part. The vehicle condition report software 102 can identify the first portion of "scratch" by comparing words of the natural language text 128 (e.g., "There", "is", "a", "large", "scratch", etc.) to terms in the vehicle part condition dictionary (e.g., "ding", "scratch"). The vehicle condition report software 102 can identify the first portion of "scratch" by determining that "scratch" matches the term "scratch" from the dictionary 130.

In some embodiments, the datastore 132 can be implemented by any technology for storing data. For example, the datastore 132 can be implemented by a volatile memory (e.g., a Synchronous Dynamic Random Access Memory (SDRAM), a Dynamic Random Access Memory (DRAM), a RAMBUS Dynamic Random Access Memory (RDRAM), etc.) and/or a non-volatile memory (e.g., flash memory). The datastore 132 may additionally or alternatively be implemented by one or more double data rate (DDR) memories, such as DDR, DDR2, DDR3, DDR4, DDR5, mobile DDR (mDDR), etc. The datastore 132 may additionally or alternatively be implemented by one or more mass storage devices such as hard disk drive(s) (HDD(s)), compact disk (CD) drive(s), digital versatile disk (DVD) drive(s), solid-state disk (SSD) drive(s), etc. While in the illustrated example the datastore 132 is illustrated as a single datastore, the datastore 132 may be implemented by any number and/or type(s) of datastore. Furthermore, the data stored in the datastore 132 may be in any data format. Examples of data formats include a flat file, binary data, comma delimited data, tab delimited data, structured query language (SQL) structures, and regular expressions (regex).

In some embodiments, the datastore 132 may be implemented by a database system, such as one or more databases. The term "database" as used herein means an organized body of related data, regardless of the manner in which the data or the organized body thereof is represented. For example, the organized body of related data may be in the form of one or more of a table, a log, a map, a grid, a packet, a datagram, a frame, a file, an e-mail, a message, a document, a report, a list or in any other form.

In the illustrated example, the vehicle condition report software 102 can generate and provide a prompt 136 for prompting a vehicle condition evaluation service 140 to process the natural language text 128 and the vehicle part information 134 into identification(s) 138 of damaged vehicle part(s) and their condition(s).

The vehicle condition evaluation service 140 of the shown example is implemented by one or more servers (e.g., computer servers) accessible via a network (e.g., a computer-implemented network). For example, the vehicle condition evaluation service 140 can be implemented by one or more physical servers and/or virtualizations of the one or more physical servers. In some embodiments, the one or more servers are hosted by a cloud provider (e.g., a public cloud provider, a private cloud provider) and/or an enterprise network.

Although the vehicle condition evaluation service 140 is shown as separate from the vehicle condition report software 102, additionally and/or alternatively, the vehicle condition evaluation service 140 may be part of and/or implemented by the vehicle condition report software 102. For example, the vehicle condition report software 102 can execute the trained LLM 142 and/or, more generally, the vehicle condition evaluation service 140, as part of the vehicle condition report software 102.

The vehicle condition evaluation service 140 of this example can execute, instantiate, implement, and/or include a trained LLM 142 to process the prompt 136, which can include the natural language text 128 and the vehicle part information 134, into the identification(s) 138. For example, the vehicle condition evaluation service 140 can provide the prompt 136 from the vehicle condition report software 102 to the trained LLM 142 to prompt the trained LLM 142 to process the natural language text 128 and the vehicle part information 134 into the identification(s) 138.

An LLM uses a transformer, which is a particular neural network architecture designed to process and generate data in sequence. The transformer is a set of neural networks that may include a decoder or an encoder and decoder pair with self-attention capabilities. The encoder and decoder extract meaning from a sequence of text and understand the relationships between words and phrases in the sequence. Inputs to LLMs are multi-dimensional vectors (e.g., word embeddings) to represent words so that words with similar contextual meanings or other relationships are close to each other in the vector space. Using word embeddings as input, transformers can pre-process text, for example, as numerical representations through the encoder and understand the context of words and phrases with similar meanings as well as other relationships between words such as parts of speech. Encoders output a continuous representation (e.g., an embedding) of the input to the decoder. LLMs apply the contexts and word relationships through the decoder to produce a unique output, such as a sequence of natural language text. For example, a decoder can iteratively determine words in sequence that have the highest probability of appearing in the same sentence in accordance with the contexts and word relationships of the input sequence of text.

The vehicle condition report software 102 can generate the prompt 136 for prompting the trained LLM 142 using portion(s) of the natural language text 128 from the audio transcription service 124. By way of example, the natural language text 128 from the audio transcription service 124 can be a sentence: "There is a large scratch on the passenger side front door" or a set of individual words: "There", "is", "a", "large", "scratch", "on", "the", "passenger", "side", "front", and "door". The portion(s) can include a first portion, such as "scratch", and one or more portions of the natural language text 128. The one or more portions can be nearby and/or proximate to the first portion. The one or more portions to the first portion can provide semantic context to the first portion. The vehicle condition report software 102 can generate, using the first portion and the nearby and/or proximate portions, the prompt 136 for prompting the trained LLM 142 to generate output text identifying a vehicle part and its condition. For example, the trained LLM 142 can generate output text that includes an identification of a passenger side front door and its condition of having a large scratch. For example, the output text can include the identification(s) 138.

As shown, the trained LLM 142 and/or, more generally, the vehicle condition evaluation service 140, outputs the output text identifying damaged vehicle part(s) and their condition(s) to the vehicle condition report software 102. The vehicle condition report software 102 can generate the report 108 describing the vehicle 106 and its condition using the output text.

As depicted, the vehicle condition report software 102 outputs the report 108 to the electronic device 112, 114 of the user 104. For example, the user 104 can display the report 108 on a display of the electronic device 112, 114. Additionally and/or alternatively, the vehicle condition report software 102 can store the report 108 for later retrieval by the user 104, a different user, or different electronic device(s) via a network.

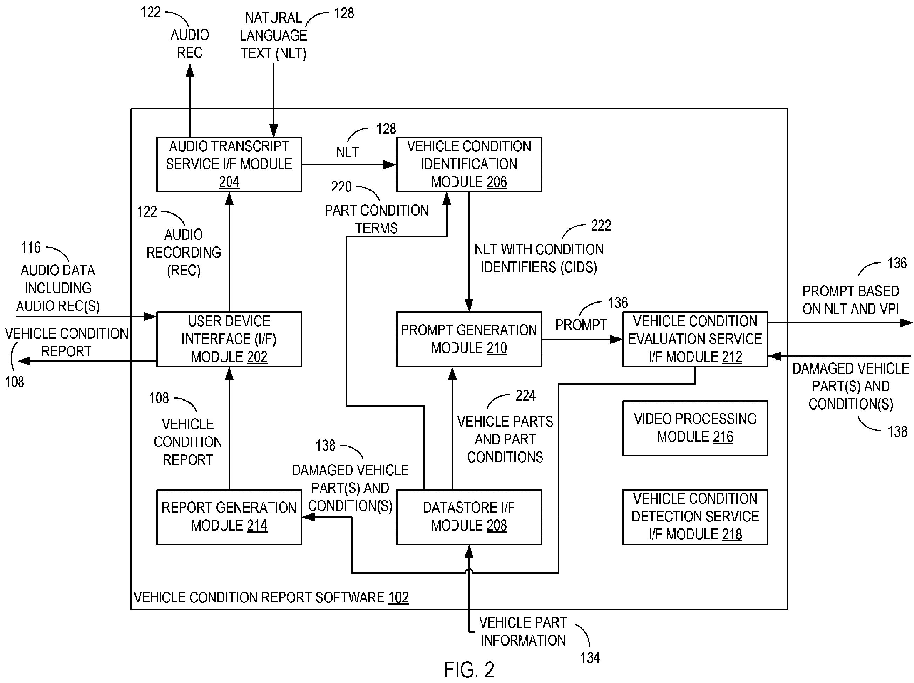

FIG. 2 is a block diagram of an example implementation of the vehicle condition report software 102 of FIG. 1 processing the audio recording 122 of the user 104 speaking about the vehicle 106 of FIG. 1 and its condition into the report 108 of FIG. 1. The implementation of the vehicle condition report software 102 shown in FIG. 2 includes a user device interface module 202, an audio transcription service interface module 204 (identified by "AUDIO TRANSCRIPT SERVICE I/F MODULE"), a vehicle condition identification module 206, a datastore interface module 208, a prompt generation module 210, a vehicle condition evaluation service interface module 212, a report generation module 214, a video processing module 216, and a vehicle condition detection service interface module 218.

In the illustrated example, the user device interface module 202 is configured to receive data from and/or transmit data to an electronic device of a user, such as the electronic device 112, 114 of the user 104 of FIG. 1. For example, the user device interface module 202 can be configured to receive the audio data 116 from the electronic device 112, 114 via a network (not shown). The audio data 116 can include one or more audio recordings of the user 104 narrating an evaluation of the vehicle 106, the parts of the vehicle 106, and condition(s) thereof. In another example, the user device interface module 202 can be configured to transmit the report 108 (e.g., the vehicle condition report) to the electronic device 112, 114 via a network (not shown).

The user device interface module 202 of this example is configured to output at least one audio recording 122 received from the electronic device 112, 114 to the audio transcription service interface module 204. For example, the user device interface module 202 can receive a single audio recording or a plurality of audio recordings. In some examples, if a plurality of audio recordings is received, the user device interface module 202 can output a first one of the plurality of audio recordings. Alternatively, the user device interface module 202 may output two or more of the plurality of audio recordings to the audio transcription service interface module 204.

The audio transcription service interface module 204 of the illustrated example is configured to transmit data to and/or receive data from the audio transcription service 124 of FIG. 1. For example, the audio transcription service interface module 204 can transmit at least one audio recording 122 to the audio transcription service 124 via a network (not shown). In another example, the audio transcription service interface module 204 can obtain (e.g., receive) the natural language text 128 transcribed from the audio recording 122 via a network (not shown). Additionally and/or alternatively, the audio transcription service interface module 204 can receive, for each particular word of at least some of a plurality of words represented by the natural language text 128, a confidence level for the particular word and at least one timestamp for the particular word. As shown, the audio transcription service interface module 204 outputs the natural language text 128 from the audio transcription service 124 to the vehicle condition identification module 206.

The vehicle condition identification module 206 of this example is configured to identify portion(s) of the natural language text 128 that contain information about a condition of a part of the vehicle 106. The vehicle condition identification module 206 can identify the portion(s) using part condition terms 220 obtained from the dictionary 130 of FIG. 1. For example, the datastore interface module 210 is configured to retrieve the vehicle part information 134 from the dictionary 130 stored in the datastore 132 of FIG. 1. The datastore interface module 208 can extract the part condition terms 220 (e.g., "ding", "scratch") from the vehicle part information 134 and output the extracted part condition terms 220 to the vehicle condition identification module 206.

The vehicle condition identification module 206 can identify the portion(s) of the natural language text 128 by executing comparisons of the natural language text 128 and the part condition terms 220. By way of example, the natural language text 128 can be a sentence "There is a large scratch on the passenger side front door" or a set of individual words "There", "is", "a", "large", "scratch", "on", "the", "passenger", "side", "front", and "door".

The vehicle condition identification module 206 can compare at least some of the words to the part condition terms 220. For example, the vehicle condition identification module 206 can compare "There" to the part condition terms 220 of, for example, "ding" and "scratch" and determine that "There" does not contain information about a condition of a vehicle part because "There" does not at least partially match any of the part condition terms. In another example, the vehicle condition identification module 206 can compare "scratch" to the part condition terms 220 of "ding" and "scratch" and determine that "scratch" contains information about a condition of a vehicle part because "scratch" at least partially matches to the part condition term "scratch". In such an example, the vehicle condition identification module 206 can identify a first portion "scratch" of the natural language text 128 to contain information about a condition of a vehicle part.

The vehicle condition identification module 206 is configured to generate data associations of portions of the natural language text 128 containing information about a condition of a vehicle part and identifiers indicating that the portions contain such information. The identifiers can be condition identifiers. The condition identifiers can be used by the trained LLM 142 to indicate to the trained LLM 142 that the associated portions of the natural language text 128 are natural language text containing information about a condition of a vehicle part.

By way of example, the vehicle condition identification module 206 can generate and/or store a data association of (i) the first portion "scratch" of the natural language text 128 and (ii) a first identifier that precedes the first portion and/or a second identifier that proceeds the first portion. In such an example, the vehicle condition identification module 206 can generate a data association by associating (e.g., appending) (i) a first identifier of [DAM] and/or a second identifier of [/DAM] and (ii) the word "scratch" to output the data of "[DAM] scratch [/DAM]". For example, the vehicle condition identification module 206 can append the first identifier immediately in front of the word "scratch" and/or append the second identifier immediately after the word "scratch".

The above identifiers are examples and any other type and/or number of identifiers may be used. The identifiers may be condition identifiers because they can indicate that an associated word describes a condition of a part. The identifiers may be damage identifiers because they can indicate that an associated word describes a size and/or type of damage (e.g., cosmetic and/or structural damage) of a part.

As shown, the vehicle condition identification module 206 outputs the natural language text 128 along with any condition identifiers as natural language text with condition identifiers 222 to the prompt generation module 210. The prompt generation module 210 is configured to generate the prompt 136 for prompting the trained LLM 142 to generate output text identifying the part and describing its condition.

In some embodiments, the prompt generation module 210 can generate the prompt 136 using the first portion (e.g., "scratch") and portion(s) of the natural language text that provide semantic context to the first portion. For example, the portion(s) can be "large" and "passenger side front door" to provide semantic context to the trained LLM 142 for the identified vehicle part condition "scratch".

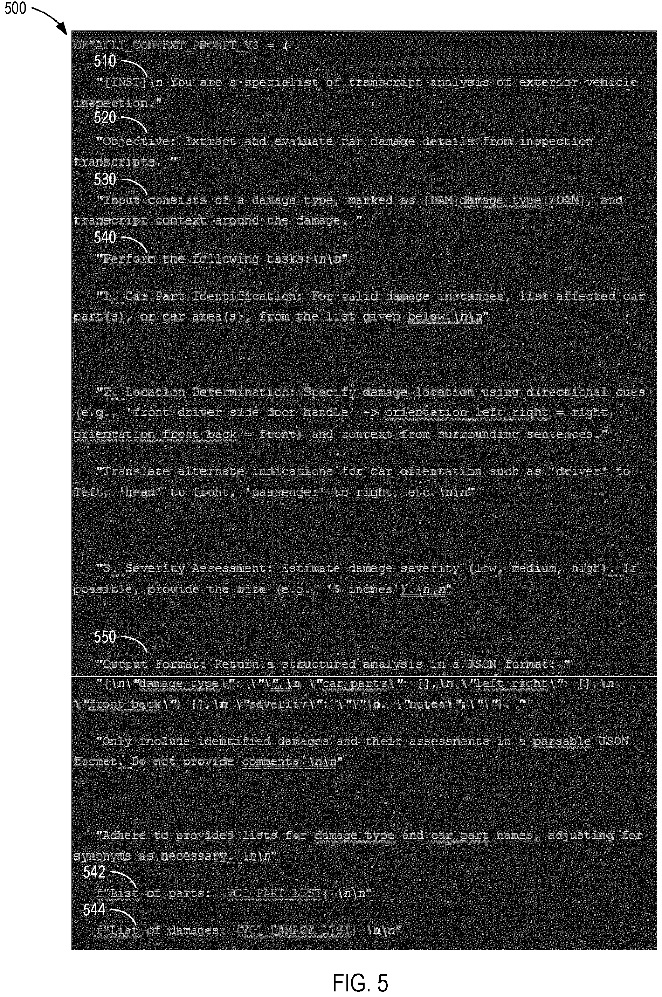

An example implementation of the prompt 136 is shown in FIG. 5 as prompt 500. For example, the prompt generation module 210 can generate the prompt 500 of FIG. 5 as the prompt 136.

In some embodiments, the prompt generation module 210 can generate the prompt 136 for prompting the trained LLM 142 to generate output text in accordance with a role 510 as shown in FIG. 5. For example, the prompt 136 can be generated to prompt the trained LLM 142 to generate output text in accordance with a role of a vehicle professional. In such an example, the prompt 136 can include the instruction "You are a specialist of transcript analysis of exterior vehicle inspection" for prompting the trained LLM 142 to generate output text as if the trained LLM 142 were such a specialist (e.g., a vehicle professional).

In some embodiments, the prompt generation module 210 can generate the prompt 136 for prompting the trained LLM 142 to generate output text in accordance with an objective 520 as shown in FIG. 5. For example, the prompt 136 can be generated to prompt the trained LLM 142 to generate output text in accordance with an objective to evaluate a condition of the vehicle 106 and its parts. In such an example, the prompt 136 can include the objective "Extract and evaluate car damage details from inspection transcripts" for prompting the trained LLM 142 to generate output text as if the trained LLM 142 were a specialist (e.g., a vehicle professional) to extract and evaluate car damage details from inspection transcripts. The inspection transcripts in this example can be a transcript of the audio recording 122. The transcript can be the natural language text 128 transcribed from the audio recording 122.

In some embodiments, the prompt generation module 210 can generate the prompt 136 for prompting the trained LLM 142 to generate output text using input 530 as shown in FIG. 5. For example, the prompt 136 can be generated to prompt the trained LLM 142 to generate output text using inputs including a damage type marked with identifier(s), and transcript context around the damage. In such an example, the prompt 136 can include the input description of "Input consists of a damage type, marked as [DAM] damage_type [/DAM], and transcript context around the damage." For example, the damage type can be "scratch" and appended (e.g., marked) with the condition identifiers of "[DAM]" and [/DAM]" and transcript context around the damage of "large" and "passenger side front door".

In some embodiments, the prompt generation module 210 can generate the prompt 136 for prompting the trained LLM 142 to generate output text by executing one or more tasks 540 as shown in FIG. 5. For example, the prompt 136 can be generated to prompt the trained LLM 142 to perform the following tasks:
1) Car Part Identification: For valid damage instances, list affected car part(s), or car area(s), from a given list of parts and damages, such as a list of parts 542 and a list of damages 544 as shown in FIG. 5.

The list of parts 542 can be a list of the vehicle parts in the dictionary 130 of FIG. 1. The list of the vehicle parts in the dictionary 130 is also shown in FIG. 2 as the vehicle parts and part conditions 224 extracted from the vehicle part information 134 by the datastore interface module 208.

The list of damages 544 can be a list of the part conditions in the dictionary 130 of FIG. 1. The list of the part conditions in the dictionary 130 is also shown in FIG. 2 as the vehicle parts and part conditions 224 extracted from the vehicle part information 134 by the datastore interface module 208.
2) Location Determination: Specific damage locations using directional cues (e.g., `front driver side door handle' -> orientation_left_right = right, orientation_front_back = front) and context from adjacent, neighboring, nearby, surrounding and/or proximate sentences. Translate alternate indications for car orientation such as 'drive' to left, 'head' to front, 'passenger' to right, etc.
3) Severity Assessment: Estimate damage severity (low, medium, high). If possible, provide the size (e.g., `5 inches').

In some embodiments, the prompt generation module 210 can generate the prompt 136 for prompting the trained LLM 142 to generate output text in accordance with an output format 550 as shown in FIG. 5. For example, the prompt 136 can be generated to prompt the trained LLM 142 to output text by returning a structured analysis in a machine parseable format (e.g., a machine readable format). Example machine parseable formats (e.g., machine readable formats) include JavaScript Object Notation (JSON), Protocol Buffer format (also referred to as protobuf), MessagePack format, Binary JavaScript Object Notation (Binary JSON), and Avro format.

Returning to the illustrated example of FIG. 2, the prompt generation module 210 generates the prompt 136 using the natural language text and condition identifiers 222 and the vehicle parts and part conditions 224. The prompt generation module 210 outputs the prompt 136 to the vehicle condition evaluation service interface module 212.

The vehicle condition evaluation service interface module 212 of the shown example is configured to transmit data to and/or receive data from the vehicle condition evaluation service 140 of FIG. 1 via a network (not shown). For example, the vehicle condition evaluation service interface module 212 can transmit and/or output the prompt 136 to the vehicle condition evaluation service 140. In another example, the vehicle condition evaluation service interface module 212 can receive the identification(s) 138 from the vehicle condition evaluation service 140 responsive to the trained LLM 142 processing the prompt 136.

In the illustrated example of FIG. 2, the vehicle condition evaluation service interface module 212 outputs the identification(s) 138 of damaged vehicle part(s) and their condition(s) to the report generation module 214. The report generation module 214 is configured to generate the report 108 using the identification(s) 138.

The report 108 shown in FIG. 2 is a vehicle condition report describing and/or including identifications of parts of the vehicle 106 and their respective conditions, such as indications of damage (e.g., a ding, a dent, a scratch). Additionally and/or alternatively, the report 108 may be an inspection report and/or a maintenance report.

The report generation module 214 is shown as outputting the report 108 to the user device interface module 202. The user device interface module 202 can output the report 108 to at least one electronic device, such as one(s) of the electronic devices 112, 114 of FIG. 1. Additionally and/or alternatively, the report generation module 214 can store the report 108 in the vehicle condition report software 102 (e.g., in a report database) and/or separate from the vehicle condition report software 102 (e.g., in a report database stored in a remote datastore not shown) for subsequent retrieval by an electronic device.

While an example implementation of the vehicle condition report software 102 of FIG. 1 is depicted in FIG. 2, other implementations are contemplated. For example, one or more blocks, components, functions, etc., of the vehicle condition report software 102 may be combined or divided in any other way. The vehicle condition report software 102 of the illustrated example may be implemented by hardware alone, or by a combination of hardware, software, and/or firmware. For example, the vehicle condition report software 102 may be implemented by one or more analog or digital circuits (e.g., comparators, operational amplifiers, etc.), one or more hardware-implemented state machines, one or more programmable processors (e.g., central processing units (CPUs), digital signal processors (DSPs), field programmable gate arrays (FPGAs), graphics processing units (GPUs), etc.), one or more network interfaces (e.g., network interface circuitry, network interface cards (NICs), smart NICs, etc.), one or more application specific integrated circuits (ASICs), one or more memories (e.g., non-volatile memory, volatile memory, etc.), one or more mass storage disks or devices (e.g., hard-disk drives (HDDs), solid-state disk (SSD) drives, etc.), etc., and/or any combination(s) thereof.

FIG. 3 is a schematic illustration of another example system 300 for generating the report 108. The system 300 can be a report generation system (e.g., a vehicle report generation system) configured to process electronic input generated by the electronic device 112, 114 of the user 104 into the report 108.

The system 300 of this example includes the vehicle condition report software 102, the audio transcription service 124 (including the at least one ASR model 126), the datastore 132 (including the dictionary 130), and the vehicle condition evaluation service 140 (including the trained LLM 142) of FIG. 1. Additionally, the system 300 includes a vehicle condition detection service 302, which includes at least one trained machine learning (ML) model 304.

As discussed further below, the vehicle condition detection service 302 inputs processed video 306 into the at least one ML model 304 to output detection(s) 308 of vehicle parts and their conditions. As shown, the detection(s) 308 of the vehicle part condition(s) include a detection of damage (e.g., a scratch) and its severity (e.g., a large scratch, a 5 inch scratch). In the illustrated example, the processed video 306 is generated by processing the video data 118 obtained from the electronic device 112, 114.

As shown and also discussed in connection with FIG. 1 above, the user 104 is evaluating the vehicle 106 for its condition, such as whether one or more parts of the vehicle 106 have damage. During the evaluation, the user 104 is generating the audio data 116 by capturing the user speech 120 narrating the evaluation using at least one microphone of the electronic device 112, 114. Additionally and/or alternatively, the user 104 is generating the video data 118 by capturing video of the vehicle 106.

In the illustrated example, the vehicle condition report software 102 obtains the audio data 116 from the electronic device 112, 114. The vehicle condition report software 102 outputs at least one audio recording 122 to the audio transcription service 124.

The audio transcription service 124 transcribes, using the at least one ASR model 126, the audio recording 122 into the natural language text 128 of FIG. 1. In some embodiments, for each particular word of at least some of a plurality of words represented by the audio recording 122, the audio transcription service 124 can determine a transcription of the particular word, determine a confidence level for the transcription of the particular word, and generate at least one timestamp indicative of when the particular word occurs in the audio recording 122. For example, the at least one ASR model 126 can determine a transcription of "scratch" from the audio recording 122, a confidence level of 90% for the transcription of "scratch", and a timestamp of 00:02:24 in hour/minute/second format (hh/mm/ss) indicative of the word "scratch" appearing 2 minutes and 18 seconds into the audio recording 122. In this example, the confidence level is expressed as a percentage (e.g., 95%) in a range of 0 to 100%. Alternatively, the confidence level may be expressed as a number in a number range, such as a number in a range between 0.0 and 1.0. In such examples, a lower score indicates a lower likelihood of correct recognition (e.g., 0%, 0.0) and a higher score indicates a higher likelihood of correct recognition (e.g., 100%, 1.0).

As shown, the at least one ASR model 126 and/or, more generally, the audio transcription service 124 can output timestamps 310 of unconfident audio. For example, the at least one ASR model 126 can determine a transcription of "scratch" from the audio recording 122, a confidence level of 35% for the transcription of "scratch", and the timestamp of 00:02:24. In such an example, the audio transcription service 124 can output the timestamp of 00:02:24 to the vehicle condition report software 102 to indicate to the vehicle condition report software 102 that transcriptions of words in the audio recording 122 at and/or around the timestamp of 00:02:24 of the audio recording 122 are unreliable. These unreliable transcriptions can be unconfident transcriptions.

In some embodiments, the audio transcription service 124 outputs a timestamp to the vehicle condition report software 102 for each particular word of at least some of a plurality of words transcribed from the audio recording 122. In some embodiments, the audio transcription service 124 outputs a timestamp to the vehicle condition report software 102 for each transcription having a confidence level below a threshold. For example, the audio transcription service 124 can output a timestamp to the vehicle condition report software 102 for a transcription having a confidence level of 60% or less or 0.6 or less. As shown, the audio transcription service 124 can output timestamps 310 of unconfident audio. The timestamps 310 can correspond to parts of the audio recording 122 that produce unconfident audio transcriptions (e.g., audio transcriptions having confidence levels at or below 60%).

In some embodiments, the transcriptions can be unreliable because of environment conditions associated with the user 104 capturing the audio data 114 and/or the video data 116. Examples of environment conditions include weather and ambient noise. Examples of weather include rain and wind. Examples of ambient noise include other person(s) speaking while the user 104 is speaking, vehicles passing by (e.g., a truck passing by an area in which the user 104 is evaluating the vehicle 106), an emergency vehicle siren, and indoor/outdoor music. For example, the user 104 can be evaluating the vehicle 106 while it is extremely windy outside, which can distort, obscure, and/or interfere with the at least one microphone of the electronic device 112, 114 and thereby cause poor transcriptions of words from the audio recording 122.

In the illustrated example, the vehicle condition report software 102 outputs a request 312 to the electronic device 112, 114 for a portion of the video data 118 between timestamps. The requested portion of the video data 118 can be video around the time of the timestamps 310 of unconfident audio. For example, the audio transcription service 124 can output a timestamp of 00:02:24 in the audio recording 122 that produced an unconfident audio transcription. In such an example, the vehicle condition report software 102 can identify a range of timestamps around the timestamp of 00:02:24, such as a range of 00:02:19 to 00:02:29. Any other range of timestamps may be used (e.g., a 5-second range of timestamps, a 20-second range of timestamps).

Beneficially, by requesting the video between the timestamps of the range of 00:02:19 to 00:02:29, the vehicle condition report software 102 can use the vehicle condition detection service 302 to provide information that may have been in the audio transcriptions during the unconfident transcription period represented by the range of timestamps. Such information may be a description and/or identification of a vehicle part and its condition, which may be provided by the vehicle condition detection service 302 processing the requested video using the at least one ML model 304.

In response to the request 312, the electronic device 112, 114 provides video 314 between the timestamps of the video data 118. For example, the electronic device 112, 114 can provide a portion of the video data 118 from a first timestamp of 00:02:19 to a second timestamp of 00:02:29. The first timestamp and the second timestamp can be timestamps in the video data 118.

The vehicle condition report software 102 can process the video 314 into the processed video 306. For example, the vehicle condition report software 102 can process a plurality of video frames of the video 314 using a filter. The filter can be a Laplacian (or Laplace) filter configured to identify which one(s) of the plurality of video frames is/are the least blurry of the plurality of video frames. For example, the vehicle condition report software 102 can be configured with a Laplacian filter to process a video frame to output a value representative of an estimate of the sharpness of the video frame.

By way of example, an approximation of the Laplacian may be used. A convolution of kernel [[0, 1, 0], [1, -4, 1], [0, 1, 0]] on the green channel of respective ones of the plurality of video frames may be performed. Alternatively, a different kernel may be used. A sum of all the values of the resulting images may be determined. The lower the value for a particular image, the blurrier the particular image is determined to be by the vehicle condition report software 102. Advantageously, by measuring in a set of video frames how strongly pixels differ from neighboring pixels, such as by using the approximation of the Laplacian, the video frame with the highest value can be selected as the least blurry frame of the set of video frames.

The vehicle condition report software 102 can select one or more of the plurality of video frames for input to the at least one trained ML model 304. For example, the vehicle condition report software 102 can select the least blurry video frame(s) as the processed video 306 for input to the at least one trained ML model 304. As depicted, the vehicle condition detection service 302 provides the processed video 306 as input to the at least one trained ML model 304 to generate the detection(s) 308 of vehicle part(s) and their condition(s) as output.

In some embodiments, the at least one trained ML model 304 implements vehicle detection. For example, the at least one trained ML model 304 can be and/or implement a vehicle detection model (e.g., a vehicle detection ML model) trained to detect a vehicle in an image (e.g., a video frame). The vehicle detection model can be a neural network configured for the task of semantic image segmentation. For example, the vehicle detection model can use pixel-wise binary classification to label each pixel in an image with a class, corresponding to what the pixel represents, and detect an object (e.g., a vehicle) in the image based on the labeled classes. An example of a neural network configured for the task of semantic image segmentation is a model in the DeepLab series (e.g., DeepLabV3, DeepLabV3+).

In some embodiments, the at least one trained ML model 304 implements part detection. For example, the at least one trained ML model 304 can be and/or implement a part detection model (e.g., a part detection ML model, a vehicle part detection ML model) trained to detect a part of a vehicle in an image (e.g., a video frame). In such an example, the part detection model can be trained for the objective of semantic segmentation of vehicle part type.

In some embodiments, the part detection model can be a neural network configured for image classification. The neural network can be a convolutional neural network (CNN). The CNN can be a Residual Network (ResNet) having any number of layers. For example, the CNN can be ResNet-50, which is a CNN that is 50 layers deep.

In some embodiments, the part detection model can be a transformer model configured for computer vision. The transformer model can be a vision transformer configured for computer vision. Examples of the transformer model include a Shifted window (SWIN) transformer and a Masked-attention Mask Transformer (Mask2Former). For example, the transformer model can be a SWIN transformer configured with at least 50 million parameters. In another example, the transformer model can be a Mask2Former model configured with at least 18 million parameters.

In some embodiments, the part detection model can be implemented by a combination of models. For example, the part detection model can be implemented by a backbone model and a head model. In such an example, the backbone model can be a neural network (e.g., a CNN, a ResNet, ResNet-50) or a transformer model. In some such examples, the head model can be a neural network configured for the task of semantic image segmentation or a transformer model.

In some embodiments, the at least one trained ML model 304 implements damage detection. For example, the at least one trained ML model 304 can be and/or implement a damage detection model (e.g., a condition detection ML model, a damage detection ML model) trained to detect damage to a vehicle part in an image (e.g., a video frame). In such an example, the damage detection model can be trained for the objective of regressing polygons drawn by annotators over damages on the vehicle 106. For example, the polygons can be in one of a plurality of classes. Examples of classes include a body crack, a dent, a misshape, a missing piece, a missing hubcap, paint damage, rustiness, and a scratch.

In some embodiments, the damage detection model can be implemented by a transformer model. An example of the transformer model is a multiscale vision transformer (MViT) configured for video classification.

In some embodiments, the damage detection model can be implemented by a neural network. The neural network can be a CNN. An example of the CNN is a Mask Region-based Convolutional Neural Network (Mask R-CNN) configured for object detection and segmentation.

In some embodiments, the damage detection model can be implemented by a combination of models. For example, the part detection model can be implemented by a backbone model and a head model. In such an example, the backbone model can be a transformer model (e.g., an MViT model). For example, the backbone model can be an MViT model configured with at least 52 million parameters. In some such examples, the head model can be a neural network (e.g., a Mask R-CNN). For example, the head model can be a Mask R-CNN configured with at least 64 million parameters.

In some embodiments, the damage detection model can be trained to output a two-dimensional size of damage and/or a detection of severity of damage to a vehicle part in an image (e.g., a video frame). For example, the damage detection model can output a polygon representative of damage on a vehicle part. In such an example, the damage detection model can apply gradient boosting to features of the polygon to output an estimate of the size of the damage. For example, the size of the damage can be in inches or centimeters.

Examples of features of the polygon include a polygon size, a diagonal of the polygon, and an identification of a vehicle part on which the polygon is generated. An example of gradient boosting is XGBoost.

In some embodiments, the damage detection model can be trained to output a three-dimensional size of damage and/or a detection of severity of damage to a vehicle part in an image (e.g., a video frame). For example, the damage detection model can output a polygon representative of damage on a vehicle part. In such an example, the damage detection model can reproject the polygon on a three-dimensional model of the vehicle part and determine the largest line in the edges of the triangles contained in the damage polygon. The size of the largest line can be output as an estimate of the size of the damage. For example, the size of the damage can be in inches or centimeters.

In some embodiments, the at least one trained ML model 304 implements viewpoint extraction. For example, the at least one trained ML model 304 can be and/or implement a viewpoint extraction model (e.g., a viewpoint extraction ML model) trained to detect and/or extract a viewpoint of a vehicle part in an image (e.g., a video frame). In such an example, the viewpoint extraction model can be trained for the objective of multi-class classification, and the output of which being one of a plurality of viewpoints. Examples of the viewpoints include left, right, front, back, left-front, left-back, right-front, right-back, and other (for non-recognized-viewpoints, such as images without vehicles).

In some embodiments, the viewpoint extraction model can be a neural network configured for image classification. The neural network can be a CNN. The CNN can be a ResNet having any number of layers. For example, the CNN can be ResNet-50, which is a CNN that is 50 layers deep.

In some embodiments, the viewpoint extraction model can be a classification model. The classification model can be a linear classification model configured to use a linear combination of weighted features to predict outcomes and categorize data points into discrete classes.

In some embodiments, the viewpoint extraction model can be implemented by a combination of models. For example, the viewpoint extraction model can be implemented by a backbone model and a head model. In such an example, the backbone model can be a neural network (e.g., a CNN, a ResNet, ResNet-50). In some such examples, the head model can be a classification model (e.g., a linear classification model).

Returning to the illustrated example of FIG. 3, the at least one ML model 304 can process the processed video 306 into the detection(s) 308. For example, the at least one ML model 304 can process, using the vehicle detection model, the processed video 306 into a detection of the vehicle 106 in the processed video 306. The at least one ML model 304 can process, using the part detection model, the processed video 306 into a detection of a part of the vehicle 106, such as a passenger side front door. The at least one ML model 304 can process, using the damage detection model, the processed video 306 into a detection of damage to the part, such as a scratch on the passenger side front door. The at least one ML model 304 can process, using the part detection model, the processed video 306 into a detection of a size of the damage, such as a size of the scratch on the passenger side front door. For example, the at least one ML model 304 can process the processed video 306 into a detection of a 5 inch long scratch on the passenger side front door of the vehicle 106. The at least one ML model 304 can process, using the viewpoint extraction model, the processed video 306 into a detection of a viewpoint of the vehicle 106 in the processed video 306, such as a right-front viewpoint of the vehicle 106.

As shown, the at least one ML model 304 and/or, more generally, the vehicle condition detection service 302, outputs the detection(s) 308 to the vehicle condition report software 102. The detection(s) 308 can include a detection of the vehicle 106, a part of the vehicle 106, damage to the part of the vehicle 106, a size of the damage, and/or a detection of the viewpoint (e.g., the viewpoint of the vehicle 106, the part, the damage).

In the illustrated example, the vehicle condition report software 102 can generate a prompt 316 based at least on the detection(s) 308. For example, the vehicle condition report software 102 can associate natural language text with the detection(s) 308 using the vehicle part information 134. In such an example, the vehicle condition report software 102 can associate a detection of a scratch on the passenger side front door of the vehicle 106 with the natural language text of "scratch", "passenger side", "front", and "door", one(s) of which can be included in the dictionary 130 stored in the datastore 132.

The vehicle condition report software 102 can generate the prompt 316 for prompting the vehicle condition evaluation service 140 to process, using the trained LLM 142, the natural language text based on the detection(s) 308 into the identification(s) 138 of the damaged vehicle part(s) and their condition(s). In some embodiments, the prompt 316 can be implemented by the prompt 500 of FIG. 5.

The vehicle condition report software 102 can receive the identification(s) 138 from the vehicle condition evaluation service 140 and generate the report 108 using the identification(s) 138. The vehicle condition report software 102 can output the report 108 to the electronic device 112, 114 of the user 104. Additionally and/or alternatively, the vehicle condition report software 102 can store the report 108 for retrieval by different electronic device(s).

FIG. 4 depicts the implementation of the vehicle condition report software 102 of FIGS. 1 and 3 that is shown in FIG. 2. The implementation shown in this example processes detections of vehicle parts and their conditions into the report 108 using the trained LLM 142 of FIGS. 1 and 3. The implementation of the vehicle condition report software 102 shown in FIG. 4 includes the user device interface module 202, the audio transcription service interface module 204, the vehicle condition identification module 206, the datastore interface module 208, the prompt generation module 210, the vehicle condition evaluation service interface module 212, the report generation module 214, the video processing module 216, and the vehicle condition detection service interface module 218 of FIG. 2.

In example operation, the user device interface module 202 receives the audio data 116 from the electronic device 112, 114 of FIGS. 1 and 3. The user device interface module 202 can parse and/or extract an audio recording, such as the audio recording 122, from the received audio data 116. The user device interface module 202 can output the audio recording 122 to the audio transcription service 124 of FIGS. 1 and 3 via the audio transcription service interface module 204.

The audio transcription service 124 can input the audio recording 122 into the at least one ASR model 126 and output from the at least one ASR model 126 at least one of a transcription of a word in the audio recording 122, a confidence level of the transcription of the word, or a timestamp in the audio recording 122 at which the word appears. In some embodiments, the at least one ASR model 126 determines that one or more transcribed words have respective confidence levels that are below a threshold (e.g., a confidence threshold, a confidence level threshold). The at least one ASR model 126 and/or, more generally, the audio transcription service 124, can output the timestamps 310 of such unconfident audio to the vehicle condition report software 102 via the audio transcription service interface module 204.

In example operation, the vehicle condition report software 102 can determine that transcription(s) of word(s) in the audio recording 122 is/are unreliable because they have relatively low confidence levels. For example, the audio transcription service interface module 204 can receive the timestamps 310 of unconfident audio, which can indicate to the audio transcription service interface module 204 and/or, more generally, the vehicle condition report software 102, that transcriptions of words at the timestamps 310 have relatively low confidence levels (e.g., less than a confidence level threshold).

The audio transcription service interface module 204 can output the timestamps 310 to the user device interface module 202 to cause the user device interface module 202 to issue the request 312 for video from the electronic device 112, 114 in a range of timestamps in the audio recording 122. The requested video can be a portion of the video data 118 approximately around the time of the timestamps 310 of unconfident audio. For example, the audio transcription service 124 can output to the audio transcription service interface module 204 a timestamp of 00:01: 16 in the audio recording 122 that produced an unconfident audio transcription (e.g., a transcription having a confidence level below a confidence level threshold). In such an example, the audio transcription service interface module 204 (and/or the user device interface module 202) can identify a range of timestamps around the timestamp of 00:01:16, such as a range of 00:01:13 to 00:01:19. Any other range of timestamps may be used (e.g., a 5-second range of timestamps, a 10-second range of timestamps, a 20-second range of timestamps).

Beneficially, by requesting the video between the timestamps of the range of 00:01:13 to 00:01:19, the vehicle condition report software 102 can use the vehicle condition detection service 302 of FIG. 3 to provide information that may have been in the audio transcriptions during the unreliable period represented by the range of timestamps. Such information may be a description and/or identification of a vehicle part and its condition, which may be provided by the vehicle condition detection service 302 processing the requested video using the at least one ML model 304.

As shown, responsive to the request 312, the user device interface module 202 can receive the video 314 between the timestamps in the range of timestamps of 00:01:13 to 00:01:19. For example, the user device interface module 202 can receive the portion of the video data 118 between a first timestamp of 00:01: 13 and a second timestamp of 00:01: 19 in the video data 118.

The user device interface module 202 of this example outputs the video 314 to the video processing module 216. The video processing module 216 is configured to perform video processing techniques on the video 314 to generate and/or output the processed video 306. An example video processing technique is filtering. For example, the video processing module 216 can process a plurality of video frames of the video 314 using a filter. An example of the filter is a Laplacian filter. For example, the video processing module 216 can process the plurality of video frames using a Laplacian filter (e.g., an approximation of the Laplacian) to output processed video frames. In such an example, the video processing module 216 can identify which one(s) of the processed video frames is/are the least blurry and/or the most visually clear of the processed video frames, which correspond to respective ones of the plurality of video frames. As shown, the video processing module 216 can output the one or more of the least blurry processed video frames as the processed video 306.

The video processing module 216 outputs the processed video 306 to the vehicle condition detection service interface module 218. The vehicle condition detection service interface module 218 outputs the processed video 306 to the vehicle condition detection service 302. Responsive to receiving the processed video 306, the vehicle condition detection service interface module 218 can receive the detection(s) 308. For example, the vehicle condition detection service interface module 218 can receive at least one of a detection of the vehicle 106, a part of the vehicle 106, damage to the part of the vehicle 106, a size of the damage, or a detection of the viewpoint (e.g., the viewpoint of the vehicle 106, the part, the damage) in the processed video 306.

In some embodiments, the detection(s) 308 include identifier(s) indicative of the detection(s) 308. For example, the detection(s) 308 can include an alphanumeric identifier that corresponds to a 8 inch long scratch on a hood of the vehicle 106 from a front perspective. In another example, the detection(s) 308 can include a first alphanumeric identifier that corresponds to a detection of 8 inch (or 8 inches), a second alphanumeric identifier that corresponds to a detection of a scratch, a third alphanumeric identifier that corresponds to a detection of a hood, and a fourth alphanumeric identifier that corresponds to a detection of the above detections made from a front perspective of the vehicle 106.

In some embodiments, the detection(s) 308 include natural language text indicative of the detection(s) 308. For example, the detection(s) 308 can include natural language text of the sentence fragment "8 inch long scratch on a hood of the vehicle from a front perspective". In another example, the detection(s) 308 can include natural language text of "8 inch long", "scratch", "hood", and "front" (or "front perspective"). As depicted, the vehicle condition detection service interface module 218 outputs the detection(s) 308 to the prompt generation module 210.

In the illustrated example, the prompt generation module 210 generates the prompt 316. The prompt generation module 210 can generate the prompt 316 for prompting the trained LLM 142 to generate output text identifying vehicle part(s) and their respective condition(s).

In some embodiments, the prompt generation module 210 generates the prompt 316 using the vehicle part and part conditions 224 and the detection(s) 308. For example, the prompt generation module 210 can generate the prompt 316 to prompt the trained LLM 142 to use the vehicle part and part conditions 224 and the detection(s) 308 to generate output text identifying one or more parts of the vehicle 106 and their respective condition(s), which are shown as the identification(s) 138 of FIGS. 1-3.

As shown, the vehicle condition evaluation service interface module 212 outputs the prompt 316 to the vehicle condition evaluation service 140, which provides the prompt 316 as input to the trained LLM 142. The vehicle condition evaluation service interface module 212 receives the output text from the trained LLM 142 via the vehicle condition evaluation service 140.

The vehicle condition evaluation service interface module 212 outputs the identification(s) 138 of the damaged vehicle part(s) and their condition(s) to the report generation module 214. The report generation module 214 generates the report 108 using the identification(s) 138. The report generation module 214 outputs the report 108 to the user device interface module 202. The user device interface module 202 outputs the report 108 to an electronic device, such as the electronic device 112, 114 of the user 104 of FIGS. 1 and 3.

FIG. 6A depicts an example transcript extract 600. In some embodiments, the transcript extract 600 implements the natural language text 128 of FIGS. 1-2. For example, the audio transcription service 124 can process the audio recording 122 into the transcript extract 600.

In some embodiments, the transcript extract 600 implements the natural language text 128 with the condition identifiers 222. For example, as shown in FIG. 6A, the transcript extract 600 includes identifiers (e.g., condition identifiers, damage identifiers) associated with a word indicative of a condition of a part. In FIG. 6A, the word "ding" is appended with a first identifier of "[DAM]" and a second identifier of "[/DAM]" to indicate that "ding" describes a condition of a vehicle part. Alternatively, any other type and/or number of identifiers may be used.

Also shown in FIG. 6A is example output 610 from the trained LLM 142. For example, the prompt generation module 210 can generate the prompt 136 using at least some of the transcript extract 600. In such an example, the prompt generation module 210 can include all the transcript extract 600 in the prompt 136. In another example, the prompt generation module 210 can include the condition word and associated identifiers (e.g., "[DAM] ding [/DAM]") and portion(s) that provide semantic context to the condition word. The portion(s) of this example can be "with a couple brush chips on the hood", which can provide semantic context to the trained LLM 142 that the ding is located on the hood of the vehicle 106.

The output 610 of this example includes output text. The output text is provided in a machine parseable format such as JSON. For example, the trained LLM 142 can process the transcript extract 600, or portion(s) thereof, as input to output the output text. In the shown example, the trained LLM 142 can output a damage type of "ding", a car part of "hood" to indicate that the ding is on the hood, a viewpoint of "front" to indicate that the "ding" was evaluated from a front viewpoint of the vehicle 106, and a severity of "minor" to indicate that the ding is relatively small in size.

FIG. 6B depicts another example transcript extract 620. In some embodiments, the transcript extract 620 implements the natural language text 128 of FIGS. 1-2. For example, the audio transcription service 124 can process the audio recording 122 into the transcript extract 620.

In some embodiments, the transcript extract 620 implements the natural language text 128 with the condition identifiers 222. For example, as shown in FIG. 6B, the transcript extract 620 includes identifiers (e.g., condition identifiers, damage identifiers) associated with a word indicative of a condition of a part. In FIG. 6B, the word "scratches" is appended with a first identifier of "[DAM]" and a second identifier of "[/DAM]" to indicate that "scratches" describes a condition of a vehicle part. Alternatively, any other type and/or number of identifiers may be used.

Also shown in FIG. 6B is example output 630 from the trained LLM 142. For example, the prompt generation module 210 can generate the prompt 136 using at least some of the transcript extract 620. In such an example, the prompt generation module 210 can include all the transcript extract 620 in the prompt 136. In another example, the prompt generation module 210 can include the condition word and associated identifiers (e.g., "[DAM] scratches [/DAM]") and portion(s) that provide semantic context to the condition word. The portion(s) of this example can be "About an inch and a half worth of', "left quarter panel", and/or "left rear zone", which can provide semantic context to the trained LLM 142 that the scratches have a particular severity (e.g., about an inch and a half in length) and location (e.g., located on the left quarter panel and the left rear zone of the vehicle 106).

The output 630 of this example includes output text. The output text is provided in a machine parseable format such as JSON. For example, the trained LLM 142 can process the transcript extract 620, or portion(s) thereof, as input to output the output text. In the shown example, the trained LLM 142 can output a damage type of "scratch", car parts of "quarter panel" and "zone" to indicate that the scratches are on a quarter panel and a zone of the vehicle 106, a viewpoint of "left" and "left" and "rear" and "rear" to indicate that the "scratches" were evaluated from a left rear viewpoint of the vehicle 106 such that the scratches are on the left rear quarter panel and the left rear zone, and a severity of "1.5 inch" and "1.5 inch" to indicate that the scratches have a size of 1.5 inches.

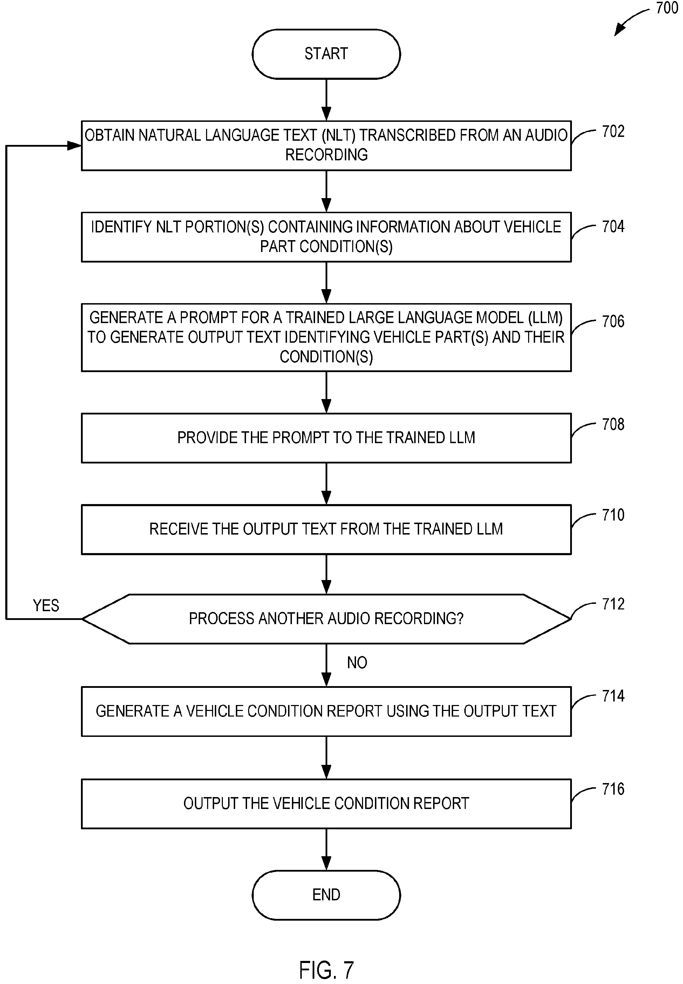

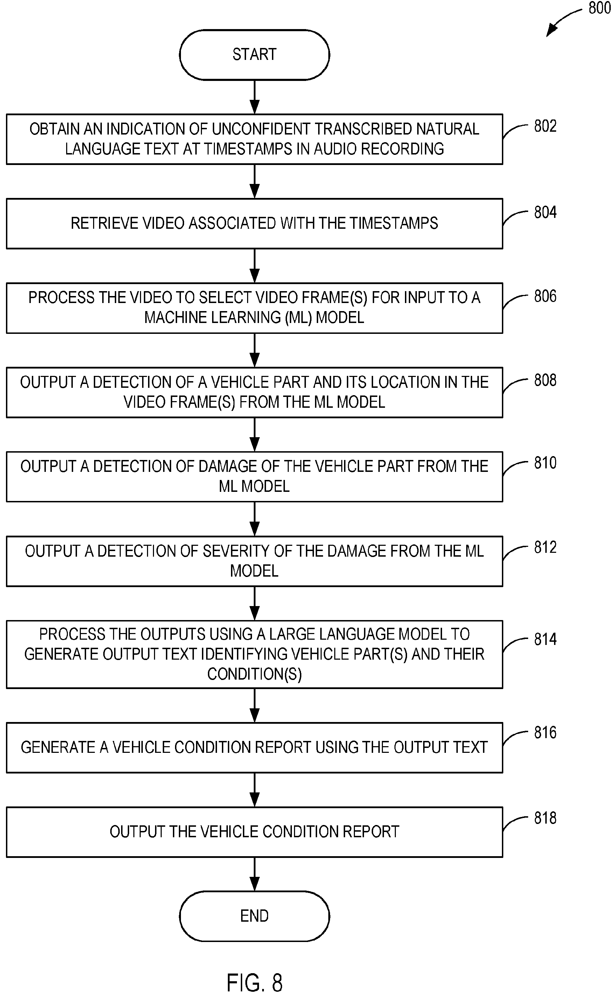

FIGS. 7 and 8 are flowcharts representative of example processes to be performed and/or example machine-readable instructions that may be executed by processor circuitry to implement the vehicle condition report software 102 of FIGS. 1, 2, 3, and/or 4. Although a flowchart may be discussed in connection with one of the vehicle condition report software 102 of FIGS. 1, 2, 3, and/or 4, the flowchart may also be applicable to any other one(s) of the vehicle condition report software 102 of FIGS. 1, 2, 3, and/or 4. Additionally or alternatively, block(s) of one(s) of the flowcharts of FIGS. 1, 2, 3, and/or 4 may be representative of state(s) of one or more hardware-implemented state machines, algorithm(s) that may be implemented by hardware alone such as an ASIC, etc., and/or any combination(s) thereof.

FIG. 7 is a flowchart 700 representative of an example process that may be performed and/or example machine-readable instructions that may be executed by processor circuitry to implement the vehicle condition report software 102 of FIGS. 1, 2, 3, and/or 4 to process natural language text transcribed from an audio recording into a vehicle condition report using a trained LLM.

The flowchart 700 of FIG. 7 begins at block 702, at which the vehicle condition report software 102 obtains natural language text transcribed from an audio recording. For example, the vehicle condition report software 102 can obtain the natural language text 128 from the at least one ASR model 126 and/or, more generally, the audio transcription service 124. In such an example, the audio transcription service interface module 204 can obtain the natural language text 128.

At block 704, the vehicle condition report software 102 identifies natural language text portion(s) containing information about vehicle part condition(s). For example, the vehicle condition identification module 206 can identify portion(s) of the natural language text 128 containing information about vehicle part condition(s) using the part condition terms 220. In such an example, the vehicle condition identification module 206 can output portion(s) of the natural language text 128 and the condition identifiers 222. The condition identifiers 222 can identify the portion(s) of the natural language text 128 that contain information about the vehicle part condition(s).

At block 706, the vehicle condition report software 102 generates a prompt for a trained LLM to generate output text identifying vehicle part(s) and their condition(s). For example, the prompt generation module 210 can generate the prompt 136 using at least one of (i) the natural language text 128 with the condition identifiers 222 or the (ii) vehicle parts and part conditions 224.

At block 708, the vehicle condition report software 102 provides the prompt to the trained LLM. For example, the vehicle condition report software 102 can output the prompt 136 to the vehicle condition evaluation service 140. In such an example, the vehicle condition evaluation service interface module 212 can output the prompt 136 to the vehicle condition evaluation service 140.

At block 710, the vehicle condition report software 102 receives the output text from the trained LLM. For example, the vehicle condition report software 102 can receive the identification(s) 138 from the vehicle condition evaluation service 140. In such an example, the identification(s) 138 can be implemented by the output 610 of FIG. 6A and/or the output 630 of FIG. 6B.

At block 712, the vehicle condition report software 102 determines whether to process another audio recording. For example, the user device interface module 202 can determine whether the received audio data 116 includes another audio recording to process. In another example, the user device interface module 202 can determine whether additional audio data 116 is received from the electronic device 112, 114.

If, at block 712, the vehicle condition report software 102 determines to process another audio recording, control returns to block 702 to obtain natural language text transcribed from the another audio recording. Otherwise, control proceeds to block 714.

At block 714, the vehicle condition report software 102 generates a vehicle condition report using the output text. For example, the report generation module 214 can generate the report 108 using the identification(s) 138.

At block 716, the vehicle condition report software 102 outputs the vehicle condition report. For example, the user device interface module 202 and/or, more generally, the vehicle condition report software 102, can output the report 108 to an electronic device, such as the electronic device 112, 114 of FIGS. 1 and 3. After outputting the vehicle condition report at block 716, the example flowchart 700 of FIG. 7 concludes.

FIG. 8 is a flowchart 800 representative of an example process that may be performed and/or example machine-readable instructions that may be executed by processor circuitry to implement the vehicle condition report software 102 of FIGS. 1, 2, 3, and/or 4 to process natural language text transcribed from an audio recording and/or detections of vehicle parts and their conditions from a video recording into a vehicle condition report using a trained LLM.

The flowchart 800 of FIG. 8 begins at block 802, at which the vehicle condition report software 102 obtains an indication of unconfident transcribed natural language text at timestamps in audio recording. For example, the vehicle condition report software 102 can obtain the timestamps 310 of unconfident audio transcriptions in the audio recording 122. In such an example, the audio transcription service interface module 204 can obtain the timestamps 310 from the at least one ASR model 126 and/or, more generally, the audio transcription service 124.

At block 804 retrieves video associated with the timestamps. For example, the vehicle condition report software 102 can transmit the request 312 for video from the electronic device 112, 114 in a range of timestamps in the video data 118 associated with the timestamps 310.

At block 806, the vehicle condition report software 102 processes the video to select video frame(s) for input to an ML model. For example, the video processing module 216 can process the video 314 into the processed video 306, which can be output to the at least one ML model 304.

At block 808, the vehicle condition report software 102 outputs a detection of a vehicle part and its location in the video frame(s) from the ML model. For example, the at least one ML model 304 can be a part detection model that processes the processed video 306 into a detection of a vehicle part, such as a front left headlight.

At block 810, the vehicle condition report software 102 outputs a detection of damage of the vehicle part from the ML model. For example, the at least one ML model can be a damage detection model that processes the processed video 306 into a detection of part damage, such as a crack in the front left headlight.

At block 812, the vehicle condition report software 102 outputs a detection of severity of the damage from the ML model. For example, the damage detection model can process the processed video 306 into a detection of severity of the part damage, such as the crack having a length of 4 inches.

At block 814, the vehicle condition report software 102 processes the outputs using a large language model to generate output text identifying vehicle part(s) and their condition(s). For example, the prompt generation module 210 can generate the prompt 316 using the detection(s) 308. The prompt generation module 210 can output the prompt 316 to the trained LLM 142 via the vehicle condition evaluation service interface module 212. The trained LLM 142 can process the prompt 316 into output text, which can be the identification(s) 138 of damaged vehicle part(s) and their condition(s).

At block 816, the vehicle condition report software 102 generates a vehicle condition report using the output text. For example, the report generation module 214 can generate the report 108 using the identification(s) 138.

At block 818, the vehicle condition report software 102 outputs the vehicle condition report. For example, the user device interface module 202 and/or, more generally, the vehicle condition report software 102, can output the report 108 to an electronic device, such as the electronic device 112, 114 of FIGS. 1 and 3. After outputting the vehicle condition report at block 818, the example flowchart 800 of FIG. 8 concludes.

FIG. 9 is an example implementation of an electronic platform 900 structured to execute the machine-readable instructions of FIGS. 7 and/or 8 to implement the vehicle condition report software 102 of FIGS. 1, 2, 3, and/or 4. It should be appreciated that FIG. 9 is intended neither to be a description of necessary components for an electronic and/or computing device to operate as the vehicle condition report software 102, in accordance with the techniques described herein, nor a comprehensive depiction.

The electronic platform 900 of this example may be an electronic device, such as a handset device (e.g., a cellular network device, a smartphone, etc.), a desktop computer, a laptop computer, a tablet computer, a server (e.g., a computer server, a blade server, a rack-mounted server, etc.), a workstation, or any other type of computing and/or electronic device.

The electronic platform 900 of the illustrated example includes processor circuitry 902, which may be implemented by one or more programmable processors, one or more hardware-implemented state machines, one or more ASICs, etc., and/or any combination(s) thereof. For example, the one or more programmable processors may include one or more CPUs, one or more DSPs, one or more FPGAs, one or more GPUs, etc., and/or any combination(s) thereof. The processor circuitry 902 includes processor memory 904, which may be volatile memory, such as random-access memory (RAM) of any type. The processor circuitry 902 of this example implements the vehicle condition identification module 206, the prompt generation module 210, the report generation module 214, and the video processing module 216 of FIGS. 2 and/or 4.

The processor circuitry 902 may execute machine-readable instructions 906 (identified by INSTRUCTIONS), which are stored in the processor memory 904, to implement at least one of the vehicle condition identification module 206, the prompt generation module 210, the report generation module 214, or the video processing module 216 of FIGS. 2 and/or 4. The machine-readable instructions 906 may include data representative of computer-executable and/or machine-executable instructions implementing techniques that operate according to the techniques described herein. For example, the machine-readable instructions 906 may include data (e.g., code, embedded software (e.g., firmware), software, etc.) representative of the flowcharts of FIGS. 7 and/or 8, or portion(s) thereof.

The electronic platform 900 includes memory 908, which may include the instructions 906. The memory 908 of this example may be controlled by a memory controller 910. For example, the memory controller 910 may control reads, writes, and/or, more generally, access(es) to the memory 908 by other component(s) of the electronic platform 900. The memory 908 of this example may be implemented by volatile memory, non-volatile memory, etc., and/or any combination(s) thereof. For example, the volatile memory may include static random-access memory (SRAM), dynamic random-access memory (DRAM), cache memory (e.g., Level 1 (L1) cache memory, Level 2 (L2) cache memory, Level 3 (L3) cache memory, etc.), etc., and/or any combination(s) thereof. In some examples, the non-volatile memory may include Flash memory, electrically erasable programmable read-only memory (EEPROM), magnetoresistive random-access memory (MRAM), ferroelectric random-access memory (FeRAM, F-RAM, or FRAM), etc., and/or any combination(s) thereof.

The electronic platform 900 includes input device(s) 912 to enable data and/or commands to be entered into the processor circuitry 902. For example, the input device(s) 912 may include an audio sensor, a camera (e.g., a still camera, a video camera, etc.), a keyboard, a microphone, a mouse, a touchscreen, a voice recognition system, etc., and/or any combination(s) thereof.

The electronic platform 900 includes output device(s) 914 to convey, display, and/or present information to a user (e.g., a human user, a machine user, etc.). For example, the output device(s) 914 may include one or more display devices, speakers, etc. The one or more display devices may include an augmented reality (AR) and/or virtual reality (VR) display, a liquid crystal display (LCD), a light-emitting diode (LED) display, an organic light-emitting diode (OLED) display, a quantum dot (QLED) display, a thin-film transistor (TFT) LCD, a touchscreen, etc., and/or any combination(s) thereof. The output device(s) 914 can be used, among other things, to generate, launch, and/or present a user interface. For example, the user interface may be generated and/or implemented by the output device(s) 914 for visual presentation of output and speakers or other sound generating devices for audible presentation of output.

The electronic platform 900 includes accelerators 916, which are hardware devices to which the processor circuitry 902 may offload compute tasks to accelerate their processing. For example, the accelerators 916 may include artificial intelligence/machine-learning (AI/ML) processors, ASICs, FPGAs, graphics processing units (GPUs), neural network (NN) processors, systems-on-chip (SoCs), vision processing units (VPUs), etc., and/or any combination(s) thereof. In some examples, one or more of the vehicle condition identification module 206, the prompt generation module 210, the report generation module 214, and/or the video processing module 216 may be implemented by one(s) of the accelerators 916 instead of the processor circuitry 902. In some examples, the vehicle condition identification module 206, the prompt generation module 210, the report generation module 214, and/or the video processing module 216 may be executed concurrently (e.g., in parallel, substantially in parallel, etc.) by the processor circuitry 902 and the accelerators 916. For example, the processor circuitry 902 and one(s) of the accelerators 916 may execute in parallel function(s) corresponding to the prompt generation module 210.

The electronic platform 900 includes storage 918 to record and/or control access to data, such as the machine-readable instructions 906. In this example, the storage 918 may optionally implement the datastore 132 of FIGS. 1 and/or 3. The storage 918 may be implemented by one or more mass storage disks or devices, such as HDDs, SSDs, etc., and/or any combination(s) thereof.

The electronic platform 900 includes interface(s) 920 to effectuate exchange of data with external devices (e.g., computing and/or electronic devices of any kind) via a network 922. In this example, the interface(s) 920 implement(s) the user device interface module 202 (identified by "USER DEVICE I/F MOD"), the audio transcription service interface module 204 (identified by "AUDIO TRANSCRIPT SERV I/F MOD"), the datastore interface module 208 (identified by "DATASTORE I/F MOD"), the vehicle condition evaluation service interface module 212 (identified by "VEHICLE CONDITION EVAL SERV I/F MOD"), and the vehicle condition detection service interface module 218 (identified by "VEHICLE COND DETECT SERV I/F MOD") of FIGS. 2 and/or 4.

The interface(s) 920 of the illustrated example may be implemented by an interface device, such as network interface circuitry (e.g., a NIC, a smart NIC, etc.), a gateway, a router, a switch, etc., and/or any combination(s) thereof. The interface(s) 920 may implement any type of communication interface, such as BLUETOOTH^{®}, a cellular telephone system (e.g., a 4G LTE interface, a 5G interface, a future generation 6G interface, etc.), an Ethernet interface, a near-field communication (NFC) interface, an optical disc interface (e.g., a Blu-ray disc drive, a Compact Disk (CD) drive, a Digital Versatile Disk (DVD) drive, etc.), an optical fiber interface, a satellite interface (e.g., a BLOS satellite interface, a LOS satellite interface, etc.), a Universal Serial Bus (USB) interface (e.g., USB Type-A, USB Type-B, USB TYPE-C^{™} or USB-C^{™}, etc.), etc., and/or any combination(s) thereof.

The electronic platform 900 includes a power supply 924 to store energy and provide power to components of the electronic platform 900. The power supply 924 may be implemented by a power converter, such as an alternating current-to-direct-current (AC/DC) power converter, a direct current-to-direct current (DC/DC) power converter, etc., and/or any combination(s) thereof. For example, the power supply 924 may be powered by an external power source, such as an alternating current (AC) power source (e.g., an electrical grid), a direct current (DC) power source (e.g., a battery, a battery backup system, etc.), etc., and the power supply 924 may convert the AC input or the DC input into a suitable voltage for use by the electronic platform 900. In some examples, the power supply 924 may be a limited duration power source, such as a battery (e.g., a rechargeable battery such as a lithium-ion battery).

Component(s) of the electronic platform 900 may be in communication with one(s) of each other via a bus 926. For example, the bus 926 may be any type of computing and/or electrical bus, such as an I2C bus, a PCI bus, a PCIe bus, a SPI bus, and/or the like.

The network 922 may be implemented by any wired and/or wireless network(s) such as one or more cellular networks (e.g., 4G LTE cellular networks, 5G cellular networks, future generation 6G cellular networks, etc.), one or more data buses, one or more local area networks (LANs), one or more optical fiber networks, one or more private networks, one or more public networks, one or more wireless local area networks (WLANs), etc., and/or any combination(s) thereof. For example, the network 922 may be the Internet, but any other type of private and/or public network is contemplated.

The network 922 of the illustrated example facilitates communication between the interface(s) 920 and a central facility 928. The central facility 928 in this example may be an entity associated with one or more servers, such as one or more physical hardware servers and/or virtualizations of the one or more physical hardware servers. For example, the central facility 928 may be implemented by a public cloud provider, a private cloud provider, etc., and/or any combination(s) thereof. In this example, the central facility 928 may compile, generate, update, etc., the machine-readable instructions 906 and store the machine-readable instructions 906 for access (e.g., download) via the network 922. For example, the electronic platform 900 may transmit a request, via the interface(s) 920, to the central facility 928 for the machine-readable instructions 906 and receive the machine-readable instructions 906 from the central facility 928 via the network 922 in response to the request.

Additionally or alternatively, the interface(s) 920 may receive the machine-readable instructions 906 via non-transitory machine-readable storage media, such as an optical disc 930 (e.g., a Blu-ray disc, a CD, a DVD, etc.) or any other type of removable non-transitory machine-readable storage media such as a USB drive 932. For example, the optical disc 930 and/or the USB drive 932 may store the machine-readable instructions 906 thereon and provide the machine-readable instructions 906 to the electronic platform 900 via the interface(s) 920.

Techniques operating according to the principles described herein may be implemented in any suitable manner. The processing and decision blocks of the flowcharts above represent steps and acts that may be included in algorithms that carry out these various processes. Algorithms derived from these processes may be implemented as software integrated with and directing the operation of one or more single- or multi-purpose processors, may be implemented as functionally equivalent circuits such as a DSP circuit or an ASIC, or may be implemented in any other suitable manner. It should be appreciated that the flowcharts included herein do not depict the syntax or operation of any particular circuit or of any particular programming language or type of programming language. Rather, the flowcharts illustrate the functional information one skilled in the art may use to fabricate circuits or to implement computer software algorithms to perform the processing of a particular apparatus carrying out the types of techniques described herein. For example, the flowcharts, or portion(s) thereof, may be implemented by hardware alone (e.g., one or more analog or digital circuits, one or more hardware-implemented state machines, etc., and/or any combination(s) thereof) that is configured or structured to carry out the various processes of the flowcharts. In some examples, the flowcharts, or portion(s) thereof, may be implemented by machine-executable instructions (e.g., machine-readable instructions, computer-readable instructions, computer-executable instructions, etc.) that, when executed by one or more single- or multi-purpose processors, carry out the various processes of the flowcharts. It should also be appreciated that, unless otherwise indicated herein, the particular sequence of steps and/or acts described in each flowchart is merely illustrative of the algorithms that may be implemented and can be varied in implementations and embodiments of the principles described herein.

Accordingly, in some embodiments, the techniques described herein may be embodied in machine-executable instructions implemented as software, including as application software, system software, firmware, middleware, embedded code, or any other suitable type of computer code. Such machine-executable instructions may be generated, written, etc., using any of a number of suitable programming languages and/or programming or scripting tools, and also may be compiled as executable machine language code or intermediate code that is executed on a framework, virtual machine, or container.

When techniques described herein are embodied as machine-executable instructions, these machine-executable instructions may be implemented in any suitable manner, including as a number of functional facilities, each providing one or more operations to complete execution of algorithms operating according to these techniques. A "functional facility," however instantiated, is a structural component of a computer system that, when integrated with and executed by one or more computers, causes the one or more computers to perform a specific operational role. A functional facility may be a portion of or an entire software element. For example, a functional facility may be implemented as a function of a process, or as a discrete process, or as any other suitable unit of processing. If techniques described herein are implemented as multiple functional facilities, each functional facility may be implemented in its own way; all need not be implemented the same way. Additionally, these functional facilities may be executed in parallel and/or serially, as appropriate, and may pass information between one another using a shared memory on the computer(s) on which they are executing, using a message passing protocol, or in any other suitable way.

Generally, functional facilities include routines, programs, objects, components, data structures, etc., that perform particular tasks or implement particular abstract data types. Typically, the functionality of the functional facilities may be combined or distributed as desired in the systems in which they operate. In some implementations, one or more functional facilities carrying out techniques herein may together form a complete software package. These functional facilities may, in alternative embodiments, be adapted to interact with other, unrelated functional facilities and/or processes, to implement a software program application.

Some exemplary functional facilities have been described herein for carrying out one or more tasks. It should be appreciated, though, that the functional facilities and division of tasks described is merely illustrative of the type of functional facilities that may implement using the exemplary techniques described herein, and that embodiments are not limited to being implemented in any specific number, division, or type of functional facilities. In some implementations, all functionalities may be implemented in a single functional facility. It should also be appreciated that, in some implementations, some of the functional facilities described herein may be implemented together with or separately from others (e.g., as a single unit or separate units), or some of these functional facilities may not be implemented.

Machine-executable instructions (e.g., processor-executable instructions) implementing the techniques described herein (when implemented as one or more functional facilities or in any other manner) may, in some embodiments, be encoded on one or more computer-readable media, machine-readable media, etc., to provide functionality to the media. Computer-readable media, machine-readable media, etc., include magnetic media such as a hard disk drive, optical media such as a CD or a DVD, a persistent or non-persistent solid-state memory (e.g., Flash memory, Magnetic RAM, etc.), or any other suitable storage media. Such a computer-readable medium, a machine-readable medium, etc., may be implemented in any suitable manner. As used herein, the terms "computer-readable media" (also called "computer-readable storage media"), "computer-readable medium" (also called "computer-readable storage medium"), "machine-readable media" (also called "machine-readable storage media"), and "machine-readable medium" (also called "machine-readable storage medium") refer to tangible storage media. Tangible storage media are non-transitory and have at least one physical, structural component. In a "computer-readable medium" and "machine-readable medium" as used herein, at least one physical, structural component has at least one physical property that may be altered in some way during a process of creating the medium with embedded information, a process of recording information thereon, or any other process of encoding the medium with information. For example, a magnetization state of a portion of a physical structure of a computer-readable medium, a machine-readable medium, etc., may be altered during a recording process.

Further, some techniques described above comprise acts of storing information (e.g., data and/or instructions) in certain ways for use by these techniques. In some implementations of these techniques-such as implementations where the techniques are implemented as machine-executable instructions-the information may be encoded on a computer-readable storage media. Where specific structures are described herein as advantageous formats in which to store this information, these structures may be used to impart a physical organization of the information when encoded on the storage medium. These advantageous structures may then provide functionality to the storage medium by affecting operations of one or more processors interacting with the information; for example, by increasing the efficiency of computer operations performed by the processor(s).

In some, but not all, implementations in which the techniques may be embodied as machine-executable instructions, these instructions may be executed on one or more suitable computing device(s) and/or electronic device(s) operating in any suitable computer and/or electronic system, or one or more computing devices (or one or more processors of one or more computing devices) and/or one or more electronic devices (or one or more processors of one or more electronic devices) may be programmed to execute the machine-executable instructions. A computing device, electronic device, or processor (e.g., processor circuitry) may be programmed to execute instructions when the instructions are stored in a manner accessible to the computing device, electronic device, or processor, such as in a data store (e.g., an on-chip cache or instruction register, a computer-readable storage medium and/or a machine-readable storage medium accessible via a bus, a computer-readable storage medium and/or a machine-readable storage medium accessible via one or more networks and accessible by the device/processor, etc.). Functional facilities comprising these machine-executable instructions may be integrated with and direct the operation of a single multi-purpose programmable digital computing device, a coordinated system of two or more multi-purpose computing device sharing processing power and jointly carrying out the techniques described herein, a single computing device or coordinated system of computing device (co-located or geographically distributed) dedicated to executing the techniques described herein, one or more FPGAs for carrying out the techniques described herein, or any other suitable system.

Embodiments have been described where the techniques are implemented in circuitry and/or machine-executable instructions. It should be appreciated that some embodiments may be in the form of a method, of which at least one example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Various aspects of the embodiments described above may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments.

The phrase "and/or," as used herein in the specification and in the claims, should be understood to mean "either or both," of the elements so conjoined, e.g., elements that are conjunctively present in some cases and disjunctively present in other cases. Multiple elements listed with "and/or" should be construed in the same fashion, e.g., "one or more" of the elements so conjoined. Other elements may optionally be present other than the elements specifically identified by the "and/or" clause, whether related or unrelated to those elements specifically identified. Thus, as a non-limiting example, a reference to "A and/or B," when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

The indefinite articles "a" and "an," as used herein in the specification and in the claims, unless clearly indicated to the contrary, should be understood to mean "at least one."

As used herein in the specification and in the claims, the phrase, "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently, "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," "having," "containing," "involving," and variations thereof herein, is meant to encompass the items listed thereafter and equivalents thereof as well as additional items.

All definitions, as defined and used herein, should be understood to control over dictionary definitions, definitions in documents incorporated by reference, and/or ordinary meanings of the defined terms.

The word "exemplary" is used herein to mean serving as an example, instance, or illustration. Any embodiment, implementation, process, feature, etc., described herein as exemplary should therefore be understood to be an illustrative example and should not be understood to be a preferred or advantageous example unless otherwise indicated.

Having thus described several aspects of at least one embodiment, it is to be appreciated that various alterations, modifications, and improvements will readily occur to those skilled in the art. Such alterations, modifications, and improvements are intended to be part of this disclosure and are intended to be within the spirit and scope of the principles described herein. Accordingly, the foregoing description and drawings are by way of example only.

Various aspects are described in this disclosure, which include, but are not limited to, the following aspects:
1. A method for processing audio data into a vehicle condition report using a trained large language model (LLM) comprising: using at least one computer processor to perform: obtaining natural language text transcribed from an audio recording of a user speaking about a vehicle and its condition; identifying a first portion of the natural language text containing information about a condition of a part of the vehicle using a vehicle part condition dictionary; generating, using the first portion and portions of the natural language text that provide semantic context to the first portion, a prompt for prompting the trained LLM to generate output text identifying the part and describing its condition; providing the prompt as input to the trained LLM; receiving the output text from the trained LLM; and generating the vehicle condition report using the output text.
2. The method of aspect 1, further comprising: receiving the audio recording; and transcribing the audio recording of the user speaking about the vehicle and its condition.
3. The method of aspect 2, wherein the audio recording was recorded by a mobile device of the user, and wherein the at least one computer processor is part of the mobile device and/or part of at least one other computing device remote from the mobile device.
4. The method of aspect 1, further comprising: receiving the audio recording; and transcribing, using an audio transcription service, the audio recording into the natural language text.
5. The method of aspect 4, wherein the natural language text comprises a plurality of words, wherein the transcribing further includes, for each particular word of at least some of the plurality of words: determining a transcription of the particular word; determining a confidence level for the transcription of the particular word; and generating at least one timestamp indicative of when the particular word occurs in the audio recording.
6. The method of aspect 5, wherein the natural language text comprises a transcription of a first word, the transcribing comprises determining a first confidence level for the transcription of the first word, and the method further comprises: determining that the first confidence level is below a threshold; and responsive to determining that the first confidence level is below the threshold, obtaining a video recording of the vehicle during a time period determined using the at least one timestamp.
7. The method of aspect 6, further comprising: processing at least a portion of the video recording using at least one trained machine learning model different from the trained LLM to identify, from the portion of the video recording, the part and detect its condition.
8. The method of aspect 7, wherein processing the portion of the video recording comprises detecting a severity of the condition of the part using the at least one trained machine learning model.
9. The method of aspect 8, wherein the portion of the video recording comprises a plurality of video frames, and wherein processing the portion of the video recording comprises selecting a subset of the plurality of video frames for input to the at least one trained ML model, wherein the selecting is performed using a Laplacian filter to identify the least blurry video frames.
10. The method of aspect 1, further comprising processing the prompt using the trained LLM to generate the output text.
11. The method of aspect 1, further comprising: receiving, using a network interface at a server, the vehicle part condition dictionary from a datastore; comparing, using vehicle condition report software executed by the server, the natural language text to the vehicle part condition dictionary; and associating an identifier and the portion of the natural language text when the portion of the natural language text corresponds to at least one word in the vehicle part condition dictionary.
12. The method of aspect 11, wherein the identifier is indicative of the portion of the natural language text being associated with a vehicle part condition, and generating the prompt comprises generating the prompt for prompting the trained LLM to identify the part and describing its condition by processing proximate portions of the portion of the natural language text appended with the identifier.
13. The method of aspect 1, further comprising outputting the vehicle condition report to a mobile device of the user and/or a database remote from the mobile device.
14. An apparatus for processing audio data into a vehicle condition report using a trained large language model (LLM) comprising: at least one hardware processor; and at least one computer-readable storage medium storing processor-executable instructions that, when executed by the at least one hardware processor, cause the at least one hardware processor to perform a method of any one of aspects 1-13.
15. At least one computer-readable storage medium storing processor-executable instructions that, when executed by at least one hardware processor, cause the at least one hardware processor to perform a method of any one of aspects 1-13.
16. A system for processing audio data into a vehicle condition report using a trained large language model (LLM), the system comprising: at least one hardware processor; and at least one computer-readable storage medium storing processor-executable instructions that, when executed by the at least one hardware processor, cause the at least one hardware processor to perform a method of any one of aspects 1-13.

## Claims

1. A method for processing audio data into a vehicle condition report using a trained large language model (LLM) comprising:
using at least one computer processor to perform:
obtaining natural language text transcribed from an audio recording of a user speaking about a vehicle and its condition;
identifying a first portion of the natural language text containing information about a condition of a part of the vehicle using a vehicle part condition dictionary;
generating, using the first portion and portions of the natural language text that provide semantic context to the first portion, a prompt for prompting the trained LLM to generate output text identifying the part and describing its condition;
providing the prompt as input to the trained LLM;
receiving the output text from the trained LLM; and
generating the vehicle condition report using the output text.

2. The method of claim 1, further comprising:
receiving the audio recording; and
transcribing the audio recording of the user speaking about the vehicle and its condition.

3. The method of claim 2,
wherein the audio recording was recorded by a mobile device of the user, and
wherein the at least one computer processor is part of the mobile device and/or part of at least one other computing device remote from the mobile device.

4. The method of claim 1 or any other preceding claim, further comprising:
receiving the audio recording; and
transcribing, using an audio transcription service, the audio recording into the natural language text.

5. The method of claim 4,
wherein the natural language text comprises a plurality of words,
wherein the transcribing further includes, for each particular word of at least some of the plurality of words:
determining a transcription of the particular word;
determining a confidence level for the transcription of the particular word; and
generating at least one timestamp indicative of when the particular word occurs in the audio recording.

6. The method of claim 5, wherein the natural language text comprises a transcription of a first word, the transcribing comprises determining a first confidence level for the transcription of the first word, and the method further comprises:
determining that the first confidence level is below a threshold; and
responsive to determining that the first confidence level is below the threshold,
obtaining a video recording of the vehicle during a time period determined using the at least one timestamp.

7. The method of claim 6, further comprising:
processing at least a portion of the video recording using at least one trained machine learning model different from the trained LLM to identify, from the portion of the video recording, the part and detect its condition.

8. The method of claim 7, wherein processing the portion of the video recording comprises detecting a severity of the condition of the part using the at least one trained machine learning model.

9. The method of claim 8,
wherein the portion of the video recording comprises a plurality of video frames, and
wherein processing the portion of the video recording comprises selecting a subset of the plurality of video frames for input to the at least one trained ML model,
wherein the selecting is performed using a Laplacian filter to identify the least blurry video frames.

10. The method of claim 1 or any other preceding claim, further comprising processing the prompt using the trained LLM to generate the output text.

11. The method of claim 1 or any other preceding claim, further comprising:
receiving, using a network interface at a server, the vehicle part condition dictionary from a datastore;
comparing, using vehicle condition report software executed by the server, the natural language text to the vehicle part condition dictionary; and
associating an identifier and the portion of the natural language text when the portion of the natural language text corresponds to at least one word in the vehicle part condition dictionary.

12. The method of claim 11, wherein the identifier is indicative of the portion of the natural language text being associated with a vehicle part condition, and generating the prompt comprises generating the prompt for prompting the trained LLM to identify the part and describing its condition by processing proximate portions of the portion of the natural language text appended with the identifier.

13. The method of claim 1 or any other preceding claim, further comprising outputting the vehicle condition report to a mobile device of the user and/or a database remote from the mobile device.

14. An apparatus for processing audio data into a vehicle condition report using a trained large language model (LLM) comprising:
at least one hardware processor; and
at least one computer-readable storage medium storing processor-executable instructions that, when executed by the at least one hardware processor, cause the at least one hardware processor to perform a method of any one of claims 1-13.

15. At least one computer-readable storage medium storing processor-executable instructions that, when executed by at least one hardware processor, cause the at least one hardware processor to perform a method of any one of claims 1-13.

16. A system for processing audio data into a vehicle condition report using a trained large language model (LLM), the system comprising:
at least one hardware processor; and
at least one computer-readable storage medium storing processor-executable instructions that, when executed by the at least one hardware processor, cause the at least one hardware processor to perform a method of any one of claims 1-13.

## Amended claims

### Amended claims in accordance with Rule 137(2) EPC.

1. A method for processing audio data into a vehicle condition report (108) using a trained large language model (LLM) comprising:
using at least one computer processor to perform:
obtaining (702) natural language text transcribed from an audio recording (116) of a user (104) speaking about a vehicle (106) and its condition;
identifying (704) a first portion of the natural language text containing information about a condition of a part of the vehicle using a vehicle part condition dictionary (130);
generating (706), using the first portion and portions of the natural language text that provide semantic context to the first portion, a prompt for prompting the trained LLM to generate output text identifying the part and describing its condition;
providing (708) the prompt as input to the trained LLM;
receiving (710) the output text from the trained LLM; and
generating (714) the vehicle condition report (108) using the output text.

2. The method of claim 1, further comprising:
receiving the audio recording (116); and
transcribing the audio recording (116) of the user (104) speaking about the vehicle (106) and its condition.

3. The method of claim 2,
wherein the audio recording (116) was recorded by a mobile device (114) of the user (104), and
wherein the at least one computer processor is part of the mobile device (114) and/or part of at least one other computing device remote from the mobile device.

4. The method of claim 1 or any other preceding claim, further comprising:
receiving the audio recording (116); and
transcribing, using an audio transcription service (124), the audio recording into the natural language text.

5. The method of claim 4,
wherein the natural language text comprises a plurality of words,
wherein the transcribing further includes, for each particular word of at least some of the plurality of words:
determining a transcription of the particular word;
determining a confidence level for the transcription of the particular word; and
generating at least one timestamp (310) indicative of when the particular word occurs in the audio recording (116).

6. The method of claim 5, wherein the natural language text comprises a transcription of a first word, the transcribing comprises determining a first confidence level for the transcription of the first word, and the method further comprises:
determining that the first confidence level is below a threshold; and
responsive to determining that the first confidence level is below the threshold,
obtaining a video recording (118) of the vehicle (106) during a time period determined using the at least one timestamp (310).

7. The method of claim 6, further comprising:
processing at least a portion of the video recording using at least one trained machine learning model different from the trained LLM to identify, from the portion of the video recording (118), the part and detect its condition.

8. The method of claim 7, wherein processing the portion of the video recording (118) comprises detecting a severity of the condition of the part using the at least one trained machine learning model.

9. The method of claim 8,
wherein the portion of the video recording (118) comprises a plurality of video frames, and wherein processing the portion of the video recording (118)comprises selecting a subset of
the plurality of video frames for input to the at least one trained ML model,
wherein the selecting is performed using a Laplacian filter to identify the least blurry video frames.

10. The method of claim 1 or any other preceding claim, further comprising processing the prompt using the trained LLM to generate the output text.

11. The method of claim 1 or any other preceding claim, further comprising:
receiving, using a network interface at a server, the vehicle part condition dictionary (130) from a datastore (132);
comparing, using vehicle condition report software executed by the server, the natural language text to the vehicle part condition dictionary (130); and
associating an identifier and the portion of the natural language text when the portion of the natural language text corresponds to at least one word in the vehicle part condition dictionary (130).

12. The method of claim 11, wherein the identifier is indicative of the portion of the natural language text being associated with a vehicle part condition, and generating the prompt comprises generating the prompt for prompting the trained LLM to identify the part and describing its condition by processing proximate portions of the portion of the natural language text appended with the identifier.

13. The method of claim 1 or any other preceding claim, further comprising outputting the vehicle condition report (108) to a mobile device (114) of the user and/or a database remote from the mobile device.

14. An apparatus for processing audio data into a vehicle condition report (108) using a trained large language model (LLM) comprising:
at least one hardware processor; and
at least one computer-readable storage medium storing processor-executable instructions that, when executed by the at least one hardware processor, cause the at least one hardware processor to perform a method of any one of claims 1-13.

15. At least one computer-readable storage medium storing processor-executable instructions that, when executed by at least one hardware processor, cause the at least one hardware processor to perform a method of any one of claims 1-13.
